Europäisches Patentamt

European Patent Office

Office européen des brevets

(19)

(11) EP 1 566 540 A2

(12) **EUROPEAN PATENT APPLICATION**

(43) Date of publication:
24.08.2005 Bulletin 2005/34

(51) Int Cl.$^7$: **F02N 11/08**, B62K 11/00

(21) Application number: 05002542.8

(22) Date of filing: 07.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **18.02.2004 JP 2004042056**

(71) Applicant: **YAMAHA HATSUDOKI KABUSHIKI KAISHA**
**Shizuoka 438-8501 (JP)**

(72) Inventor: **Ishigami, Hidetoshi**
**Yamaha Hatsudoki K.K.**
**Iwata-shi Shizuoka-ken 438-8501 (JP)**

(74) Representative: **Grünecker, Kinkeldey,**
**Stockmair & Schwanhäusser Anwaltssozietät**
**Maximilianstrasse 58**
**80538 München (DE)**

(54) **Saddle type vehicle, and engine controlling apparatus and idle stop canceling method for the saddle type vehicle**

(57)     A saddle type vehicle (1) includes an engine (15) for driving a wheel (4) of the vehicle (1), and a braking apparatus (12, 13). The vehicle (1) includes an engine stopcontrollingunit (S8, S26, S27) which stops the engine (15) when a predetermined engine stop condition is satisfied, a brake state detecting unit (S6) which detects a brake state of the braking apparatus (12, 13), and a restart controlling unit (S29, S72) which restarts the engine (15) once stopped by the engine stop controlling unit (S8, S26, S27) when deactuation of the braking apparatus (12, 13) is detectedby the brake state detecting unit (S6).

FIG. 1

**Description**

BACKGROUND OF THE INVENTION

1. Field of the Invention

The present invention relates to a saddle type vehicle, such as a two-wheeled vehicle or a three-wheeled vehicle, which is straddled by a driver for driving thereof and, particularly, to a control operation to be performed when an engine once brought in an idle stop state is restarted in response to detection of a predetermined idle stop cancellation condition.

2. Description of the Related Art

Idle stop systems are known, which improve energy saving by stopping an engine (driving source) of a motor vehicle if a predetermined vehicle stop condition is satisfied during driving of the motor vehicle, and restarting the engine if a predetermined restoration condition is satisfied during the engine stop. In an idle stop system disclosed in Japanese Unexamined Patent Publication (KOKAI) No. 11-257123 (1999), for example, the engine is restarted in response to an accelerating operation performed during the engine stop. More specifically, an engine start command is output when an increase in accelerator opening degree (throttle opening degree) by the accelerating operation (throttle up operation) performed by a driver is detected.

With this arrangement, however, the time required for the restart of the engine to start the motor vehicle is not sufficiently short to satisfy a demand of the driver. Particularly in the case of a saddle type vehicle such as a two-wheeled vehicle, the driver starts the vehicle simply by unbraking the vehicle and operating an accelerator grip, and often wants to more speedily start the vehicle. Therefore, even if the idle stop system of the Japanese Unexamined Patent Publication (KOKAI) No. 11-257123 is applied to the saddle type vehicle, it is impossible to provide vehicle start timing desired by the driver, failing to provide excellent driving comfort.

With the arrangement disclosed in the patent publication, it is necessary to detect the throttle opening degree, thereby requiring a throttle position sensor (throttle opening degree sensor). Therefore, this arrangement is not applicable to a motor vehicle having no throttle position sensor.

SUMMARY OF THE INVENTION

It is an obj ect of the present invention to provide a saddle type vehicle which allows for energy saving by stop control of an engine and reduces time required for restart of the engine for speedy start of the vehicle, and to provide an engine controlling apparatus and an idle stop canceling method for such a saddle type vehicle.

It is another object of the present invention to provide a saddle type vehicle including a fuel injection type engine and adapted to determine a proper fuel injection amount at restart of the engine for an improved engine restart capability, and to provide an engine controlling apparatus and an idle stop canceling method for such a saddle type vehicle.

A saddle type vehicle according to the present invention includes an engine for driving a wheel of the vehicle, a braking apparatus, engine stop controlling means which stops the engine when a predetermined engine stop condition is satisfied, brake state detecting means which detects a brake state of the braking apparatus, and restart controlling means which restarts the engine once stopped by the engine stop controlling means when deactuation of the braking apparatus is detected by the brake state detecting means.

With this arrangement, the engine is stopped when a predetermined engine stop condition is satisfied (so-called "idle stop control"). This improves energy saving. The engine once stopped is restarted in response to the detection of the deactuation of the braking apparatus. A typical procedure for the start of the saddle type vehicle is such that a driver deactuates the braking apparatus and then operates an accelerator. Therefore, the arrangement for restarting the engine in response to the detection of the deactuation of the braking apparatus facilitates the restart of the engine as compared with a case where the restart of the engine is based on detection of a throttle opening degree. This reduces the time required for the restart of the engine, thereby allowing for speedy start of the vehicle.

Further, the restart of the engine in response to the detection of the deactuation of the braking apparatus does not necessarily require a throttle position sensor (TPS) which detects the throttle opening degree. That is, the aforementioned arrangement is applicable to a saddle type vehicle having no throttle position sensor.

The restart of the engine is based on the detection of the deactuation of the braking apparatus as described above. Therefore, the engine is started when the driver deactuates the braking apparatus to walk away from the vehicle. This prevents the driver from leaving the vehicle when the vehicle is in an idle stop state.

The saddle type vehicle may include a front wheel and a rear wheel, and the braking apparatus may include a front brake which brakes the front wheel and a rear brake which brakes the rear wheel. In this case, the brake state detecting means preferably detects brake states of the front brake and the rear brake, and the restart controlling means preferably restarts the engine when deactuation of the front brake for unbraking the front wheel is detected by the brake state detecting means in a state where the front wheel and the rear wheel are respectively braked by the front brake and the rear brake.

With this arrangement, the engine once stopped is restarted when the deactuation of the front brake is detected in the state where the front wheel and the rear wheel are respectively braked by the front brake and the rear brake. Thus, the vehicle can be properly started on an upward slope. In general, when the driver stops the saddle type vehicle on the slope, the driver actuates both the front brake and the rear brake. When the driver is to start the vehicle on the upward slope, the driver deactuates the front brake with the rear brake kept actuated for prevention of reverse movement of the vehicle, and then operates the accelerator (for throttle up) to start the vehicle. Therefore, the engine can be speedily restarted to start the vehicle on the upward slope by primarily detecting the deactuation of the front brake.

This operation is performed, for example, to restart the engine once brought into the idle stop state by the actuation of both the front brake and the rear brake.

Alternatively, the saddle type vehicle may include a front wheel and a rear wheel, and an accelerator to be operated by a driver for controlling an output of the engine, and the braking apparatus may include a front brake which brakes the front wheel and a rear brake which brakes the rear wheel. The saddle type vehicle may further include a front brake actuator and a rear brake actuator separately provided for actuating the front brake and the rear brake, respectively, and one of the front and rear brake actuators disposed closer to the accelerator than the other brake actuator may be defined as an accelerator side brake actuator. In this case, the brake state detecting means preferably detects brake states of the front brake and the rear brake, and the restart controlling means preferably restarts the engine when deactuation of one of the front and rear brakes associated with the accelerator side brake actuator for unbraking a corresponding one of the front and rear wheels is detected by the brake state detecting means in a state where the front wheel and the rear wheel are respectively braked by the front brake and the rear brake.

With this arrangement, the engine once stopped is restarted when the deactuation of the brake associated with the accelerator side brake actuator is detected in the state where the front wheel and the rear wheel are respectively braked by the front brake and the rear brake. In general, when the driver is to start the saddle type vehicle, the driver stops operation of the accelerator side brake actuator, and then operates the accelerator. Therefore, speedy start of the engine can be achieved to start the vehicle as intended by the driver by restarting the engine in response to the deactuation of the brake associated with the accelerator side brake actuator.

In general, when the driver is to start the saddle type vehicle on an upward slope, the driver deactuates the brake associated with the accelerator side brake actuator, and operates the accelerator (for throttle up) while actuating the brake associated with the brake actuator disposed away from the accelerator for prevention of reverse movement of the vehicle. Therefore, the engine can be speedily restarted to start the vehicle on the upward slope by primarily detecting the deactuation of the brake associated with the accelerator side brake actuator.

Alternatively, the saddle type vehicle may include a front wheel and a rear wheel, and the braking apparatus may include a front brake which brakes the front wheel and a rear brake which brakes the rear wheel. The brake state detecting means may detect brake states of the front brake and the rear brake. In this case, the restart controlling means preferably restarts the engine in response to deactuation of one of the front and rear brakes for unbraking a corresponding one of the front and rear wheels is detected by the brake state detecting means in a state where the one wheel is braked by the one brake.

With this arrangement, where one of the front and rear brakes is actuated for the braking, the engine once stopped is restarted upon the detection of the deactuation of the one brake. Thus, the engine can be restarted reliably and speedily as intended by the driver.

This operation is performed to restart the engine once brought into the idle stop state by the actuation of one of the front and rear brakes, for example.

The saddle type vehicle may further include throttle opening degree detecting means which detects the throttle opening degree of the engine. In this case, the restart controlling means preferably restarts the engine once stopped by the engine stop controlling means when a throttle opening degree not lower than a predetermined opening degree is detected by the throttle opening degree detecting means.

With this arrangement, the engine once stopped is restarted when the throttle opening degree not lower than the predetermined degree is detected. Therefore, the engine once brought into the idle stop state, for example, when the vehicle is stopped only by the rear brake on the upward slope, can be restarted simply by operating the accelerator (for throttle up).

The restart controlling means may restart the engine once brought into the idle stop state when a starter switch is operated for energization of a starter motor to start the engine. With this arrangement, the engine once brought into the idle stop state is restarted simply by operating the starter switch even without operating the braking apparatus.

The saddle type vehicle may further include engine temperature detecting means which detects the temperature of the engine. In this case, the restart controlling means preferably restarts the engine once stopped by the engine stop controlling means when an engine temperature not higher than a predetermined temperature level is detected by the engine temperature detecting means.

With this arrangement, the engine once stopped is restarted when the engine temperature is not higher than the predetermined temperature level. This prevents reduction of the engine temperature to maintain the engine in a standby state that allows for reliable restart of the engine.

The saddle type vehicle may further include a starter motor for starting the engine, a battery which supplies electric power to the starter motor, and battery voltage detecting means which detects the voltage of the battery. In this case, the restart controlling means preferably restarts the engine once stopped by the engine stop controlling means, when a battery voltage not higher than a predetermined voltage level is detected by the battery voltage detectingmeans. With this arrangement, the engine once stopped is restarted when the battery voltage is not higher than the predetermined voltage level. Thus, the battery voltage is maintained at a level that allows for reliable driving of the starter motor. Therefore, the engine can be reliably restarted.

The saddle type vehicle preferably further includes a headlight, and headlight controlling means which controls power supply to the headlight and reduces the power supply to the headlight when the engine is stopped by the engine stop controlling means. With this arrangement, the power supply to the headlight is reduced when the engine is stopped. Since electric power consumed by actuation of the headlight in the idle stop is reduced, reduction of the battery voltage can be suppressed for reliable restart of the engine.

The engine may be a fuel injection type engine.

In general, the accelerator (throttle) of the saddle type vehicle is substantially fully closed immediately after the deactuation of the braking apparatus. Therefore, it is easy to estimate the amount of air taken into the engine when the engine is restarted immediately after the deactuation of the braking apparatus and, hence, it is easy to determine a proper fuel injection amount compared to restarting the engine once in the idle stop state with throttle up only. Thus, an air-to-fuel ratio is maintained at a proper level, so that the engine can be more reliably restarted. Further, it is possible to suppress or prevent generation of toxic exhaust gas components which may otherwise occur due to an improper air-to-fuel ratio.

More specifically, in the case of a carburetor type engine, the fuel supply amount is controlled principally by the amount of air taken into a cylinder. In the case of the fuel injection type engine, however, it is impossible to perform such a control operation. Therefore, the fuel injection is typically controlled to be effected in proper timing during a cranking rate increasing process after the start of the fuel injection type engine. More specifically, it is necessary to feed a fuel in an air flow into the cylinder before an engine air inlet port is opened (or when the engine air inlet port is opened). Therefore, the fuel injection amount is determined based on an estimate (the result of an experiment or a preliminary setting) without detecting the amount of air taken into the engine.

The amount of air taken into the engine depends upon the throttle opening degree (in reality, further depends upon an engine speed (or a cranking rate at the restart)). With the arrangement for the restart of the engine in response to the increase of the throttle opening degree as disclosed in Japanese Unexamined Patent Publication (KOKAI) No. 11-257123, it is difficult to properly determine the fuel injection amount at the restart, because the throttle opening degree at the restart is unstable and the intake air amount is correspondingly unstable.

Where the engine is restarted in response to the deactuation of the braking apparatus, on the other hand, the throttle opening degree is substantially zero. Therefore, it is easy to estimate the intake air amount and to provide a proper fuel injection amount. Thus, a proper air-to-fuel ratio can be provided to properly start the engine. Further, it is possible to suppress the generation of the toxic exhaust gas components at the restart of the engine.

An engine controlling apparatus according to the present invention is adapted for a saddle type vehicle which includes an engine for driving a wheel of the vehicle, and a braking apparatus. The engine controlling apparatus includes engine stop controlling means which stops the engine when a predetermined engine stop condition is satisfied, brake state detectingmeans which detects a brake state of the braking apparatus, and restart controlling means which restarts the engine once stopped by the engine stop controlling means when deactuation of the braking apparatus is detected by the brake state detecting means. This arrangement improves energy saving by idle stop, and ensures speedy restart of the engine to provide driving comfort.

Where the saddle type vehicle includes a front wheel and a rear wheel and the braking apparatus includes a front brake which brakes the front wheel and a rear brake which brakes the rear wheel, the brake state detecting means preferably detects brake states of the front brake and the rear brake, and the restart controlling means preferably restarts the engine when deactuation of the front brake for unbraking the front wheel is detected by the brake state detecting means in a state where the front wheel and the rear wheel are respectively braked by the front brake and the rear brake. With this arrangement, the saddle type vehicle can be properly started even on an upward slope.

Alternatively, the saddle type vehicle may include a front wheel and a rear wheel, and an accelerator to be operated by a driver for controlling an output of the engine, and the braking apparatus may include a front brake which brakes the front wheel and a rear brake which brakes the rear wheel. Further, the saddle type vehicle may include a front brake actuator and a rear brake actuator separately provided for actuating the front brake and the rear brake, respectively, and one of the front and rear brake actuators disposed closer to the accelerator than the other brake actuator may be defined as an accelerator side brake actuator. In this case, the brake state detecting means preferably detects brake states of the front brake and the rear brake, and the restart controlling means preferably restarts the engine when deactuation of one of the front and rear brakes associated with the accelerator side brake actuator for unbraking a corresponding one of the front and rear wheels is detected by the brake state detecting means in a state where the front wheel and the rear wheel are respectively braked by the front brake and the rear brake. With this arrangement, the saddle type vehicle can be speedily started as intended by the driver. In addition, the vehicle can be properly started even on an upward slope.

Alternatively, the saddle type vehicle may include a front wheel and a rear wheel, and the braking apparatus may include a front brake which brakes the front wheel, and a rear brake which brakes the rear wheel. In this case, the brake state detecting means preferably detects brake states of the front brake and the rear brake. The restart controlling means preferably restarts the engine when deactuation of one of the front and rear brakes for unbraking a corresponding one of the front and rear wheels is detected by the brake state detecting means in a state where the one wheel is braked by the one brake. With this arrangement, the engine can be speedily restarted as intended by the driver even if only one of the front and rear brakes is actuated for the braking.

An idle stop canceling method is adapted for a saddle type vehicle which includes an engine for driving a wheel of the vehicle, and a braking apparatus. This method includes the steps of detecting a brake state of the braking apparatus, and restarting the engine once brought into an idle stop state when deactuation of the braking apparatus is detected in the brake state detecting step. This method improves energy saving by idle stop, and ensures speedy restart of the engine.

The foregoing and other objects, features and effects of the present invention will become more apparent from the following detailed description of the preferred embodiments with reference to the attached drawings.

BRIEF DESCRIPTION OF THE DRAWINGS

Fig. 1 is a schematic diagram illustrating the construction of a two-wheeled vehicle as a saddle type vehicle according to one embodiment of the present invention;
Fig. 2 is a schematic plan view illustrating a handle of the two-wheeled vehicle;
Fig. 3 is a block diagram illustrating an arrangement relating to control of an engine of the two-wheeled vehicle;
Fig. 4 is a diagram showing idle stop effectuation conditions for idle stop of the engine;
Fig. 5 is a diagram showing idle stop cancellation conditions for restart of the engine;
Fig. 6 is a state transition diagram showing transition of the state of the engine;
Fig. 7 is a flow chart of a control operation to be performed by an FI controller for controlling the engine;
Fig. 8 is a flow chart of a specific example of a brake state detecting process;
Fig. 9 is a flow chart of an exemplary sub-routine for idle stop effectuation judgment;
Fig. 10 is a flow chart of an exemplary sub-routine for idle stop cancellation judgment;
Fig. 11 is a flow chart of a specific example of an unbraking judgment process;
Fig. 12 is a flow chart of a sub-routine for a headlight dimming process;
Fig. 13 is a flow chart of a sub-routine for a headlight restoration process;
Fig. 14 is a block diagram illustrating the construction of an idle stop system for a two-wheeled vehicle according to another embodiment of the present invention; and
Fig. 15 is a block diagram illustrating the construction of an idle stop system for a two-wheeled vehicle according to further another embodiment of the present invention.

DETAILED DESCRIPTION OF PREFERRED EMBODIMENTS

First embodiment

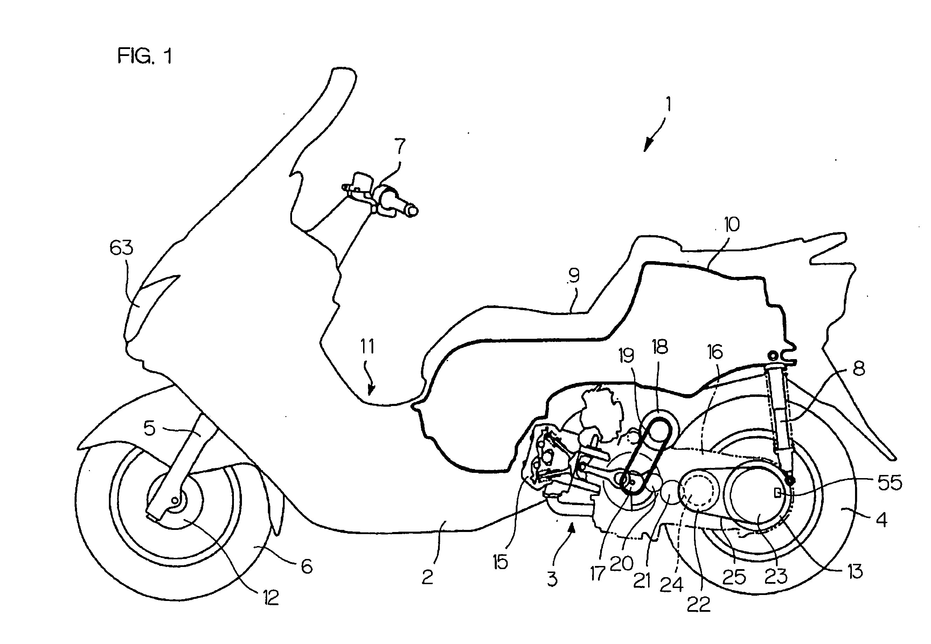

Fig. 1 is a schematic diagram illustrating the construction of a two-wheeled vehicle 1 (such as a motor-cycle) as a saddle type vehicle according to a first embodiment of the present invention. The two-wheeled vehicle 1 is a so-called scooter, i.e., a relatively light saddle type vehicle which does not require a manual clutching operation for starting. The two-wheeled vehicle 1 includes a vehicle body frame 2, a power unit 3 attached to the vehicle body frame 2 in a vertically movable manner, a rear wheel 4 which is rotatable by a driving force received from the power unit 3, a front wheel 6 as a steerable wheel attached to a front portion of the vehicle body frame 2 via a front fork 5, and a handle 7 pivotal together with the front fork 5. A headlight 63 is provided in front of the handle 7 for illuminating a front side of the two-wheeled vehicle 1.

The power unit 3 is movably connected to a lower middle portion of the vehicle body frame 2, and resiliently connected to a rear portion of the vehicle body frame 2 via a rear cushion unit 8. A driver' s seat 9 is provided on an upper middle portion of the vehicle body frame 2, and a passenger's seat 10 is provided on a rear side of the driver's seat 9. A foot rest 11 is provided at a position of the vehicle body frame 2 between the seat 9 and the handle 7. A front brake unit 12 and a rear brake unit 13 are provided in the front wheel 6 and the rear wheel 4, respectively.

The power unit 3 integrally includes an engine 15 and a transmission case 16. A driving force from a starter motor 18 is transmitted to a crank shaft 17 of the engine 15 via a belt 19 and a one-way clutch (not shown) when the engine 15 is started. The transmission case 16 accommodates a driving pulley 22 which receives rotation of the crank shaft 17 transmitted via gears 20, 21, a driven pulley 23 which receives rotation of the driving pulley 22 transmitted via a belt 25 and is connected to the rear wheel 4, and a centrifugal clutch 24 switchable between a state in which rotation of the gear 21 is transmitted to the driving pulley 22 and a state in which the rotation of the gear 21 is not transmitted to the driving pulley 22. The driving force of the starter motor 18 may be transmitted to the crank shaft 17 by gears instead of the belt 19.

The centrifugal clutch 24 is a rotation-speed responsive clutch which connects the gear 21 to the drive pulley 22 to transmit the driving force from the engine 15 to the driving pulley 22 when the rotation speed of the engine 15 reaches a predetermined transmission rotation speed. Thus, the driving force of the engine 15 is transmitted to the rear wheel 4 to start the two-wheeled vehicle 1 when the rotation speed of the engine 15 reaches the transmission rotation speed.

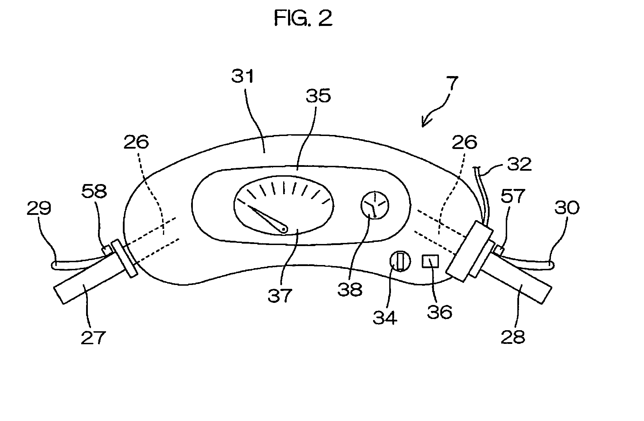

Fig. 2 is a schematic plan view illustrating an arrangement relating to the handle 7. The handle 7 includes handle shafts 26 extending laterally, a left grip 27 and a right grip (manually operable accelerator) 28 which are respectively gripped by left and right hands of the driver, a rear brake lever 29 provided in association with the left grip 27, a front brake lever 30 provided in association with the right grip 28, and a handle cover 31 which covers a region of the handle between the left and right grips 27, 28.

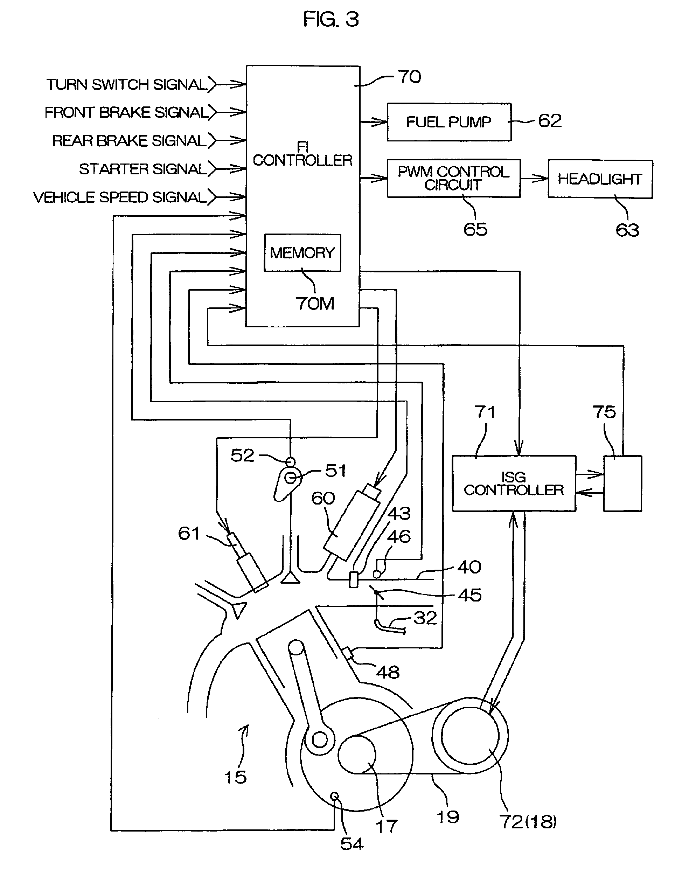

The right grip 28 functions as an accelerator (accelerator grip), and is rotatable about the handle shaft 26. The throttle opening degree of the engine 15 is increased to increase an engine output by rotating the right grip 28 toward the driver, and is reduced to reduce the engine output by rotating the right grip 28 away from the driver (forward). The operation of the right grip 28 is mechanically transmitted to a throttle 45 (see Fig. 3) to be described later via an accelerator wire 32.

The rear brake lever 29 is defined as a rear brake actuator which is operated by the driver to actuate the rear brake unit 13 forbrakingthe rear wheel. Similarly, the front brake lever 30 is defined as a front brake actuator which is operated by the driver to actuate the front brake unit 12 for braking the front wheel. The operation of the brake levers 29, 30 may be transmitted to the brake units 13, 12 via wires, or the brake units 13, 12 may be actuated by hydraulic mechanisms which respectively operate according to the operation of the brake levers 29, 30. In any cases, the front wheel 6 is braked by gripping the front brake lever 30, and unbraked by releasing the front brake lever 30. Similarly, the rear wheel 4 is braked by gripping the rear brake lever 29, and unbraked by releasing the rear brake lever 29.

An instrument panel 35 is provided at the center of the handle cover 31. A main switch 34 which brings the engine 15 into a stand-by state and a starter switch 36 which starts the engine 15 are provided between the instrument panel 35 and the right grip 28 on the handle cover 31. The instrument panel 35 includes a speed meter 37, a fuel meter 38 and the like.

Fig. 3 is a block diagram illustrating an arrangement relating to control of the engine 15 of the two-wheeled vehicle 1. The engine 15 is of a fuel injection type, for example, a four-cycle engine having a single cylinder. The two-wheeled vehicle 1 includes an FI (Electronic Fuel Injection System) controller (electronic control unit) 70 defined as engine output controlling means which electronically controls fuel injection to the engine 15, an ISG (Integrated Starter Generator) 72 integrally including a power generator and the starter motor 18, an ISG controller 71 which controls the ISG 72, and a battery 75. In this embodiment, the FI controller 70 also functions as engine stop controlling means which brings the engine 15 into an idle stop state, brake state detecting means which detects operation states of the brake units 12, 13, and restart controlling means which restarts the engine 15 once brought into the idle stop state.

The FI controller 70 receives a cam signal that is input as an output signal of a cam sensor 52 which detects a cam position on the basis of movement of a timing rotor (not shown) attached to a cam shaft 51 of the engine 15. The stroke of the engine 15 is determined based on the cam signal.

The FI controller 70 further receives a crank angle signal that is input as an output signal of a crank angle sensor 54 which detects a crank position on the basis of movement of a timing rotor (not shown) attached to the crank shaft 17 of the engine 15. The crank angle signal indicates the result of the detection of a crank angle of the engine 15. The FI controller 70 detects an engine speed by detecting an interval (cycle) of crank angle signals.

The FI controller 70 further receives a vehicle speed signal that is input as an output signal of a magnet sensor 55 (see Fig. 1) which detects the vehicle speed of the two-wheeled vehicle 1 on the basis of movement of the driven pulley 23 attached to the wheel (e.g., the rear wheel 4). The vehicle speed of the two-wheeled vehicle 1 is detected on the basis of a time interval of pulses output from the magnet sensor 55. That is, the FI controller 70 detects the wheel rotation speed of the two-wheeled vehicle 1 by detecting the interval (cycle) of vehicle speed signals, and converting the wheel rotation speed into the vehicle speed.

The FI controller 70 further receives a starter signal that is input when the starter switch 36 provided on the handle 7 of the two-wheeled vehicle 1 is turned on. In the two-wheeled vehicle 1, the starter signal is used as an engine start signal for starting the engine 15. In general, a scooter is designed so that the engine 15 cannot be started unless the brake units are in a braking state.

Further, a throttle opening degree signal indicating the throttle opening degree of the throttle 45 of a butterfly valve type provided in an air inlet pipe 40 of the engine 15 is input to the FI controller 70 from a throttle position sensor 46 (throttle opening degree detecting means). The throttle position sensor 46 detects the opening degree of the throttle 45, and outputs the throttle opening degree signal which indicates the opening degree. The throttle opening degree signal changes linearly with the throttle opening degree, for example. The operation of the right grip 28 as the accelerator is mechanically transmitted to the throttle 45 via the accelerator wire 32. Therefore, the opening degree of the throttle 45 is associated with the operation amount of the right grip 28.

An air inlet pipe negative pressure sensor 43 which detects a negative pressure in the air inlet pipe 40 is disposed downstream of the throttle 45 with respect to an air intake direction in the air inlet pipe 40. An output signal of the air inlet pipe negative pressure sensor 43 is input to the FI controller 70.

The FI controller 70 further receives an engine temperature signal that is input as an output signal of a temperature sensor 48 which detects the temperature of the engine 15. The FI controller 70 detects the warming state of the engine 15 (easiness of the restart) on the basis of the engine temperature signal. The temperature sensor 48 may be arranged to detect the temperature of the cylinder block of the engine 15. Where the engine 15 is cooled by a water cooling system, a water temperature sensor which detects the temperature of the cooling water may be provided in a radiator, and the engine temperature may be estimated based on an output of the water temperature sensor.

Further, a front brake signal is input to the FI controller 70. That is, the operation state of the front brake lever 30 is detected by a front brake switch 57 (see Fig. 2), and output as an ON/OFF signal (front brake signal) to the FI controller 70.

Further, a rear brake signal is input to the FI controller 70. That is, the operation state of the rear brake lever 29 is detected by a rear brake switch 58 (see Fig. 2), and output as an ON/OFF signal (rear brake signal) to the FI controller 70. The FI controller 70 detects brake states of the brake units 12, 13 on the basis of these two brake signals.

Further, a battery voltage is input to the FI controller 70 from the battery 75. The FI controller 70 further receives a turn switch signal indicating the operation state of a turn switch which is operated by the driver to actuate a right or left blinker when the vehicle is to be turned right or left.

An injector (INJ, fuel injector) 60, an ignition coil (IGN) 61 and a fuel pump 62 are connected to output terminals of the FI controller 70. Further, a PWM (Pulse Width Modulation) control circuit 65 which adjusts power supply to the headlight 63 by PWM control is connected to the FI controller 70.

The FI controller 70 applies a start signal for starting the ISG 72, and a power generation electric current command value and a power generation voltage command value for the ISG 72 to the ISG controller 71. Thus, the ISG controller 71 drives the ISG 72, and receives a rotation signal from the ISG 72.

The ISG 72 is driven by the engine 15 to generate electric power. The electric power generated by the ISG 72 is charged into the battery 75 via the ISG controller 71. The battery 75 supplies the electric power to driving circuits of electric components.

The start signal is output as a start command from the FI controller 70 to the ISG controller 71 when the starter signal is detected or an idle stop cancellation condition for the restart is satisfied.

The two-wheeled vehicle 1 according to this embodiment is designed so that the engine 15 is brought into the idle stop state through the control of the FI controller 70 for suppression of needless fuel consumption in the idling when predetermined idle stop effectuation conditions are all satisfied.

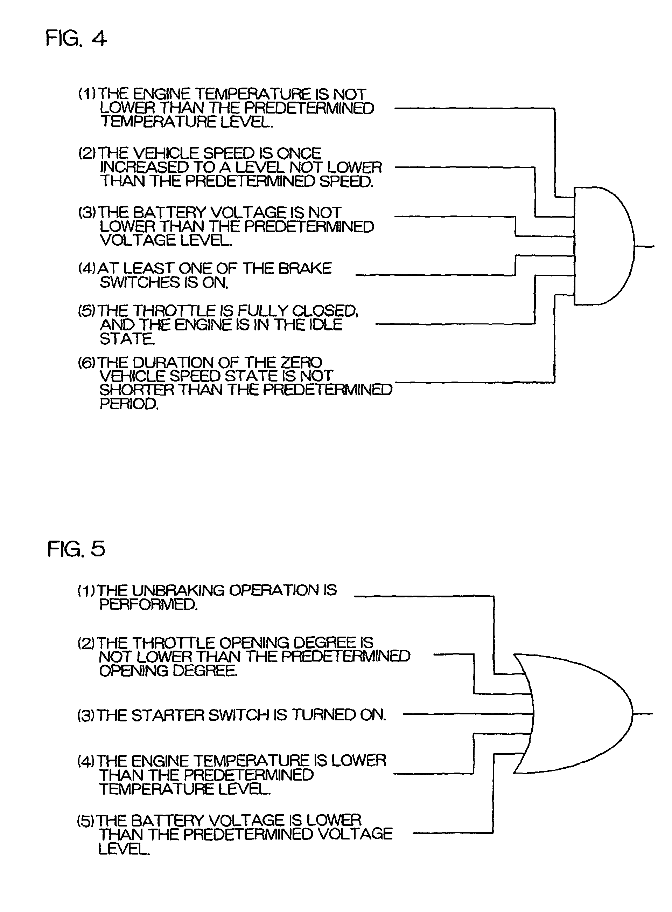

Fig. 4 is a diagram showing idle stop effectuation conditions (1) to (6) for the idle stop of the engine 15 of the two-wheeled vehicle 1 (engine stop conditions) according to this embodiment.

Effectuation condition (1) : The engine temperature is not lower than a predetermined temperature level.

The effectuation condition (1) that the engine temperature is not lower than the predetermined temperature level (e.g., 65°C) is satisfied, if the engine temperature signal output from the temperature sensor 48 is not lower than a predetermined level. This condition means that the engine temperature is sufficiently high to bring the engine 15 into the idle stop state. In other words, the engine temperature is sufficiently high for easy restart of the engine 15 once stopped. It is noted that the reference engine temperature for the effectuation condition (1) is not limited to 65°C.

Effectuation condition (2): The vehicle speed is once increased to a level not lower than a predetermined speed.

The effectuation condition (2) that the vehicle speed is once increased to a level not lower than the predetermined speed (e.g., 10km/h) is satisfied, if it is judged, for example, on the basis of the vehicle speed signal, that the two-wheeled vehicle 1 is driven immediately before the engine 15 is brought into the idle stop state. There is a possibility that the battery 75 is not sufficiently charged if the vehicle is driven at a lower speed. In this connection, the effectuation condition (2) means that the battery 75 is charged sufficiently for easy restart of the engine 15 once stopped. It is noted that the reference vehicle speed for the effectuation condition (2) is not limited to 10 km/h.

<u>Effectuation condition (3)</u> : The battery voltage is not lower than a predetermined voltage level.

The effectuation condition (3) that the battery voltage is not lower than the predetermined voltage level (e.g., 12.0V) is satisfied, if the battery voltage applied to the FI controller 70 is not lower than a predetermined voltage level. This condition means that electric power sufficient for the restart of the engine 15 is provided. It is noted that the reference battery voltage for the effectuation condition (3) is not limited to 12.0 V.

<u>Effectuation condition (4)</u> : At least one of the brake switches is on.

The effectuation condition (4) that at least one of the brake switches is on is satisfied, if the front brake signal of the front brake switch 57 or the rear brake signal of the rear brake switch 58 is input to the FI controller 70. This condition means that the driver intends to stop the two-wheeled vehicle 1.

<u>Effectuation condition (5)</u> : The throttle is fully closed and the engine is in an idle state.

On the basis of the throttle opening degree signal applied from the throttle position sensor 46 and the crank angle signal of the crank angle sensor 54, it is judged whether the effectuation condition (5) that the throttle 45 is fully closed and the engine speed is equal to an idle speed is satisfied. This condition means that the engine 15 is rotated at a speed not higher than a predetermined speed in the idle state with the throttle being fully closed. The judgment on whether the throttle 45 is fully closed may be based on whether the air inlet pipe negative pressure of the engine 15 is at a negative pressure level observed in the idle state, rather than basedon the throttle opening degree signal of the throttle position sensor 46. The air inlet pipe negative pressure is determined based on the output signal of the air inlet pipe negative pressure sensor 43, and is defined as a bottompressure of the air inlet pipe observed immediately before an air inlet port of the engine 15 is closed. Thus, the judgment on whether the throttle 45 is fully closed can be achieved by a less expensive method.

<u>Effectuation condition (6)</u> : The duration of a zero vehicle speed state is not shorter than a predetermined period.

On the basis of the interval of the pulses output from the magnet sensor 55 (see Fig. 1) and a timer (not shown) incorporated in the FI controller 70, it is judged whether the effectuation condition (6) that the duration of the zero vehicle speed state (0 km/h) is not shorter than the predetermined period (e.g., 3 seconds) is satisfied. It is difficult to detect the zero vehicle speed state, because the wheel is not rotated. Therefore, the zero vehicle speed state is detected when the interval of the output pulses of the magnet sensor 55 is increased to a certain level according to the rotation speed of the driven pulley 23 connected to the rear wheel 4 in the two-wheeled vehicle 1. The effectuation condition (6) that the duration of the zero vehicle speed state is not shorter than the predetermined period prevents the idle stop of the engine 15, for example, when the vehicle is temporarily stopped at a railway crossing. This prevents frequent idle stop of the engine 15. It is noted that the reference period for the duration of the zero vehicle speed state for the effectuation condition (6) is not limited to 3 seconds. The vehicle speed may be determined based on the speed of the front wheel 6.

In this embodiment, when the two-wheeled vehicle 1 satisfies all the effectuation conditions (1) to (6), the fuel injection and the ignition are immediately stopped to bring the engine 15 into the idle stop state. If no consideration is given to inconvenience of frequent restart of the engine, the effectuation condition (2) may be excluded from the essential conditions for the idle stop.

In this embodiment, the two-wheeled vehicle 1 is designed so as to restart the engine 15 once brought into the idle stop state if at least one of the following predetermined idle stop cancellation conditions (restart conditions) is satisfied.

Fig. 5 is a diagram showing the idle stop cancellation conditions (1) to (5) for the restart of the engine 15 in the two-wheeled vehicle 1 according to this embodiment.

<u>Cancellation condition (1)</u> : An unbraking operation is performed.

The cancellation condition (1) that the unbraking operation is performed is satisfied, if one of the front brake lever 30 and the rear brake lever 29 is released to turn off/on a corresponding one of the brake switches 57, 58. In other words, the cancellation condition (1) is satisfied, if one of the front brake signal of the front brake switch 57 and the rear brake signal of the rear brake switch 58 is no longer input to the FI controller 70. That is, the engine 15 once brought into the idle stop state is restarted when the driver releases the front brake lever 30 or the rear brake lever 29 of the two-wheeled vehicle 1.

More specifically, the cancellation condition (1) involves the following three cases.

(a) Where both the front brake unit 12 and the rear brake unit 13 are actuated during the idle stop, the deactuation of the front brake unit 12 operated by the front brake lever 30 disposed on the same side as the accelerator (right grip 28) is defined as the idle stop cancellation condition.
(b) Where only the rear brake unit 13 is actuated during the idle stop, the deactuation of the rear brake unit 13 is defined as the idle stop cancellation condition.
(c) Where only the front brake unit 12 is actuated during the idle stop, the deactuation of the front brake unit 12 is defined as the idle stop cancellation condition.

Cancellation condition (2) : The throttle opening degree is not lower than a predetermined opening degree.

On the basis of the throttle opening degree signal output from the throttle position sensor 46, it is judged whether the cancellation condition (2) that the throttle opening degree is not lower than the predetermined opening degree (e.g., 22 degrees) is satisfied. This condition means that the driver turns the right grip (accelerator grip) 28 of the handle 7 to start the two-wheeled vehicle 1. It is noted that the reference throttle opening degree for the cancellation condition (2) is not limited to 22 degrees.

Cancellationcondition (3) : The starter switch is turned on.

The cancellation condition (3) that the starter switch 36 is turned on is satisfied, if the starter signal of the starter switch 36 is input to the FI controller 70. This condition means that the driver presses the starter switch 36 to start the two-wheeled vehicle 1. When the starter switch 36 is turned on to restart the engine 15, the starter signal is output as long as the starter switch 36 is on. However, the duration of the starter signal output by single operation of the starter switch 36 is limited to a predetermined period (e.g., 2.5 seconds). It is noted that, when the engine 15 is automatically restarted irrespective of the cancellation condition (3), the starter signal is output for a predetermined period (e.g., 2.5 seconds).

Cancellation condition (4) : The engine temperature is lower than a predetermined temperature level.

The cancellation condition (4) that the engine temperature is lower than the predetermined temperature level (e.g., 55° C) is satisfied, if the engine temperature signal of the temperature sensor 48 is lower than a predetermined level. This condition means that the engine temperature is not maintained at a temperature level that ensures smooth restart of the engine 15. That is, when the engine temperature is lower than the predetermined temperature level in the two-wheeled vehicle 1, the idle stop is cancelled to restart the engine 15, so that the engine temperature is maintained at not lower than the predetermined temperature level. It is noted that the reference engine temperature for the cancellation condition (4) is not limited to 55°C.

Cancellationcondition (5): Thebatteryvoltage is lower than a predetermined voltage level.

The cancellation condition (5) that the battery voltage is lower than the predetermined voltage level (e. g., 11.8V) is satisfied, if the battery voltage applied to the FI controller 70 is lower than a predetermined voltage level. The reference voltage level for the cancellation condition (5) is set lower than the reference voltage level for the idle stop effectuation condition (3). Even during the idle stop, electric power of the battery 75 is consumed, for example, by the brake lamp. When the electric power charged in the battery 75 is lower than a predetermined power level, it is impossible to reliably restart the engine. Therefore, the idle stop is canceled to restart the engine 15 for charging the battery 75, when the battery voltage is lower than the predetermined power level even with the vehicle being stopped. It is noted that the reference battery voltage for the cancellation condition (5) is not limited to 11.8 V.
Next, transition of the state of the two-wheeled vehicle 1 according to this embodiment will be described.

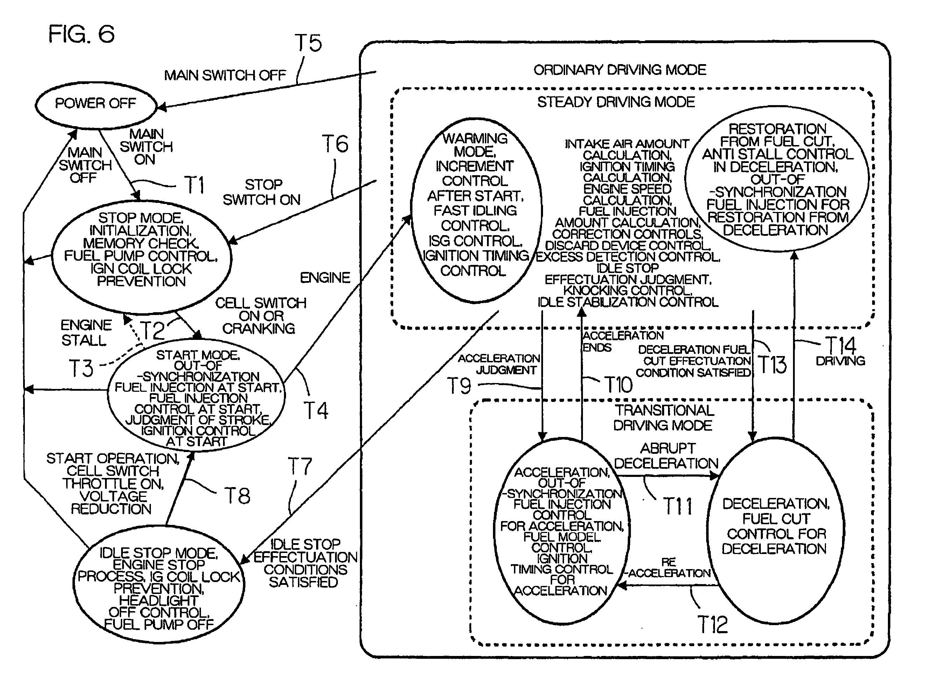

Fig. 6 is a state transition diagram showing the transition of the state of the engine 15 of the two-wheeled vehicle 1. The engine 15 has an operation mode which is switched between a stop mode, a start mode, an idle stop mode and an ordinary driving mode under predetermined conditions. The ordinary driving mode includes a steady driving mode and a transitional driving mode. State data indicating the current state (mode) of the engine 15 is stored in a state management memory (not shown) provided in the FI controller 70.
In Fig. 6, when the main switch 34 (see Fig. 2) is turned on in a power off state, the operation mode of the engine 15 is switched to the stop mode (T1).
When the driver turns on the starter switch 36 or performs a push-start or kick-start operation for cranking in the stop mode, the operation mode of the engine 15 is switched to the start mode (T2). If engine stall occurs in the start mode, the operation mode of the engine 15 is switched back to the stop mode (T3). Then, the engine 15 is ignited in the start mode and, when a predetermined complete explosion engine speed is reached, the operationmode of the engine 15 is switched to a warming mode of the steady driving mode (T4).

When the main switch 34 is turned off in the ordinary driving mode, the engine 15 is turned off (T5). When a stop switch (not shown) is turned on, the operation mode of the engine 15 is switched to the stop mode (T6).

On the other hand, when all the idle stop effectuation conditions (1) to (6) described above are satisfied in the steady driving mode, the operation mode of the engine 15 is switched to the idle stop mode (T7). Then, the operation mode of the engine 15 once switched to the idle stop mode is switched again to the start mode for the restart of the engine 15 (T8) when at least one of the idle stop cancellation conditions (1) to (5) described above is satisfied.

When the engine 15 is to be accelerated in the steady driving mode of the ordinary driving mode, the operation mode of the engine 15 is switched to the transitional driving mode for acceleration (T9). When the acceleration of the engine 15 ends in the transitional driving mode, the operation mode of the engine 15 is switched back to the steady driving mode (T10).

The engine 15 brought into the transitional driving mode is repeatedly accelerated (T11) and decelerated (T12) by abrupt acceleration and deceleration.

When a deceleration fuel cut condition (fuel cut condition) is satisfied in the steady driving mode, the operation mode of the engine 15 is switched to the transitional driving mode for deceleration (T13). The decelerated engine 15 is restored from the fuel cut operation for driving, and the operationmode of the engine 15 is switched back to the steady driving mode (T14).

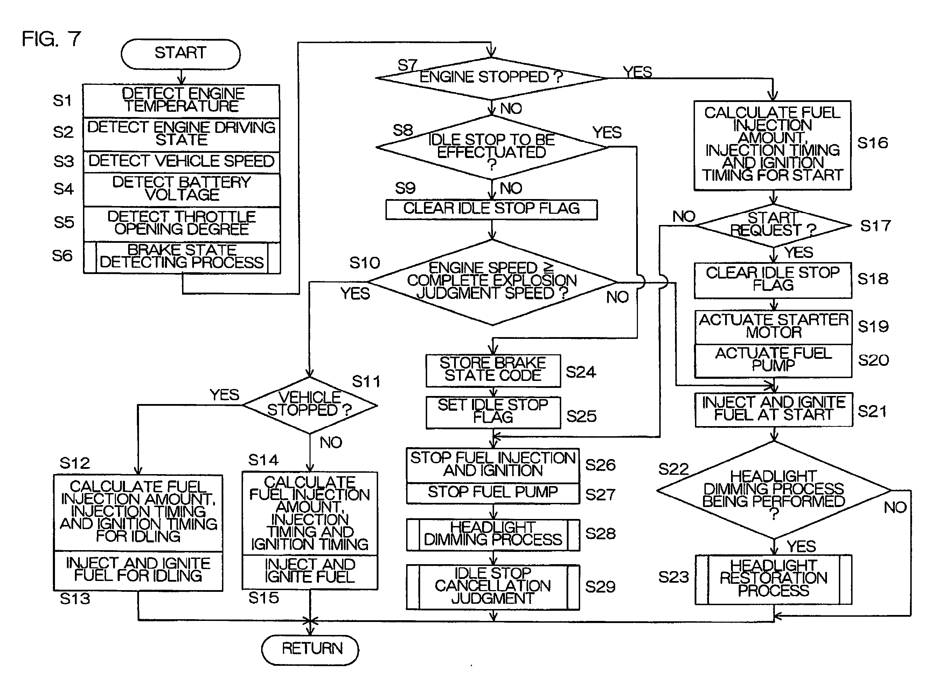

Fig. 7 is a flow chart of a control operation to be performed by the FI controller 70 for controlling the engine 15. Particularly, the control operation shown in Fig. 7 is repeatedly performed by the FI controller 70 when the main switch 34 is turned on for power supply. The FI controller 70 detects the engine temperature on the basis of the output of the temperature sensor 48 (Step S1, in which the FI controller 70 functions as engine temperature detecting means). Further, the FI controller 70 detects the state of the engine as described with reference to Fig. 6 (Step S2). More specifically, the FI controller 70 refers to the state data stored in the state management memory. Further, the FI controller 70 determines the vehicle speed by processing the output of the magnet sensor 55 (Step S3), and detects the battery voltage output from the battery 75 (Step S4). The FI controller 70 further detects the throttle opening degree on the basis of the output of the throttle position sensor 46 (step S5). Then, the FI controller 70 detects the brake states on the basis of the outputs of the brake switches 57, 58 (Step S6).

With reference to the aforementioned state data, the FI controller 70 determines whether the engine 15 is stopped (Step S7). If the engine 15 is not stopped (NO in Step S7), the FI controller 70 judges whether an idle stop operation is to be performed to stop the engine 15 (Step S8). This operation will be detailed later.

If the idle stop operation is not to be performed (NO in Step S8), the FI controller 70 clears an idle stop flag (Step S9). The idle stop flag is herein defined as a flag which indicates that the idle stop operation is performed, and is set when all the idle stop effectuation conditions are satisfied.

Then, the FI controller 70 determines the engine speed on the basis of the output signal of the crank angle sensor 54, and judges whether a condition that the engine speed is not lower than the complete explosion engine speed is satisfied (Step S10). This judgment is negative during the cranking. However, once the explosion starts, the engine speed is increased to a level not lower than the complete explosion engine speed.

If YES in Step S10 (the engine speed is not lower than the complete explosion engine speed) thereby to indicate that the engine is started, the FI controller 70 judges on the basis of the output signal of the magnet sensor 55 (vehicle speed sensor) whether a condition that the vehicle speed is not higher than a predetermined speed (e.g., 1 km/h) is satisfied, i.e., whether the two-wheeled vehicle 1 is stopped (Step S11). If the vehicle is stopped (YES in Step S11), an idling control process is performed (Steps S12, S13).

In the idling control process, the FI controller 70 calculates a fuel injection amount, fuel injection timing and ignition timing for the idling (Step S12). Then, the FI controller 70 controls the injector 60 on the basis of command values corresponding to the fuel injection amount and the injection timing thus calculated, and controls the ignition coil 61 so as to ignite the fuel in the calculated ignition timing (Step S13). Thereafter, the routine returns to Step S1 to perform a process sequence from Step S1.

On the other hand, if the two-wheeled vehicle 1 is not stopped (NO in Step S11), the FI controller 70 calculates the fuel injection amount, the fuel injection timing and the ignition timing according to the throttle opening degree and the engine speed (Step S14). Then, the FI controller 70 controls the injector 60 on the basis of the fuel injection amount and the fuel injection timing thus calculated, and controls the ignition coil 61 in the calculated ignition timing (Step S15). Thereafter, the routine returns to Step S1 to perform the process sequence from Step S1.

On the other hand, if the engine is stopped (YES in Step S7), the FI controller 70 calculates the fuel injection amount, the fuel injection timing and the ignition timing for the restart of the engine 15 (Step S16). Further, the FI controller 70 judges whether a start request is applied to the FI controller 70 (Step S17). If the start request is not applied (NO in Step S17), the FI controller 70 continuously stops the fuel injection from the injector 60 (Step S26), and keeps the fuel pump 62 inactive (Step S27).

If the start request is applied (YES in Step S17), the FI controller 70 clears the idle stop flag (Step S18), and applies the start command to the ISG controller 71 (Step S19). Thus, the ISG controller 71 starts the starter motor 18. Further, the FI controller 70 actuates the fuel pump 62 (Step S20). Then, the FI controller 70 controls the injector 60 on the basis of the fuel injection amount and the fuel injection timing calculated in Step S16, and controls the ignition coil 61 on the basis of the ignition timing calculated in Step S16 (Step S21). In a process sequence from Step S18 to Step S21 and a cancellation judging process (Step S29) to be described later, the FI controller 70 functions as restart controlling means for restarting the engine 15 once brought into the idle stop state.

Further, the FI controller 70 judges whether a dimming process to be described later is performed for reducing the power supply to the headlight 63 (Step S22) . If the dimming process is performed (YES in Step S22), a headlight restoration process is performed to restore the power supply to the headlight 63 to an ordinary level (Step S23). Thereafter, the routine returns to Step S1 to repeat the process from Step S1. If the dimmingprocess is not performed (NO in Step S22), the routine returns to Step S1 without performing the headlight restoration process.

If the idle stop operation is to be performed to stop the engine 15 (YES in Step S8) when the engine is active (NO in Step S7), the FI controller 70 stores a brake state code (to be described later) obtained in the brake state detecting process (Step S6) in an internal memory 70M (see Fig. 3) (Step S24). Further, the FI controller 70 sets the idle stop flag indicating that the engine is in the idle stop state (Step S25). Then, the FI controller 70 stops the fuel injection from the injector 60 (Step S26), and stops the fuel pump 62 (Step S27). Thus, the engine 15 is stopped. In the Steps S8 and S25 to S27, the FI controller 70 functions as the engine stop controlling means.

The FI controller 70 performs the headlight dimming process (Step S28) for reducing the power supply to the headlight 63, and performs the cancellation judging process (Step S29) for judging whether the engine 15 is to be restarted from the idle stop state. Thereafter, the routine returns to Step S1.

During the cranking (during the engine start by the starter motor 18), the judgment in Step S10 is negative. In this case, the routine goes to Step S21 to continuously control the injector 60 and the injection coil 61 on the basis of the fuel injection amount, the fuel injection timing and the ignition timing for the start of the engine.

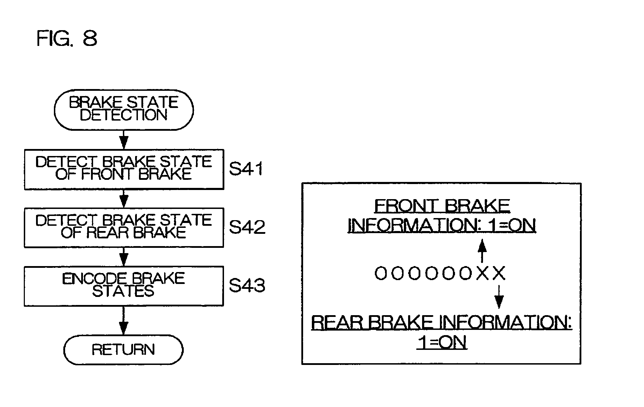

Fig. 8 is a flow chart of a specific example of the brake state detecting process (Step S6 in Fig. 7). The FI controller 70 fetches the front brake signal from the front brake switch 57 (see Fig. 2) and the rear brake signal from the rear brake switch 58 (see Fig. 2) to detect the operation states (brake states) of the front brake unit 12 and the rear brake unit 13 (Steps S41, S42). On the basis of the detected operation states, the FI controller 70 encodes the brake states of the front and rear brake units 12, 13 (Step S 43).

More specifically, the lowest two bits of 1-bite (8-bit) data are assigned to the brake state code for the front and rear brake units 12, 13. In the example shown in Fig. 8, the second lowest bit is assigned to the brake state of the front brake unit 12, and the lowest bit is assigned to the brake state of the rear brake unit 13. In this example, a bit value of 1 indicates that the corresponding brake unit is actuated (in a braking state), and a bit value of 0 indicates that the corresponding brake unit is deactuated (in an unbraking state). That is, the brake state code represented by the two bits indicates the following four brake states.

00: Both the front brake unit and the rear brake unit are in the unbraking state.
01: The front brake unit is in the unbraking state, and the rear brake unit is in the braking state.
10: The front brake unit is in the braking state, and the rear brake unit is in the unbraking state.
11: Both the front brake unit and the rear brake unit are in the braking state.

If it is judged in the idle stop effectuation judgment (Step S8 in Fig. 7) that the idle stop operation is to be performed, the brake state code is stored in the memory 70M.

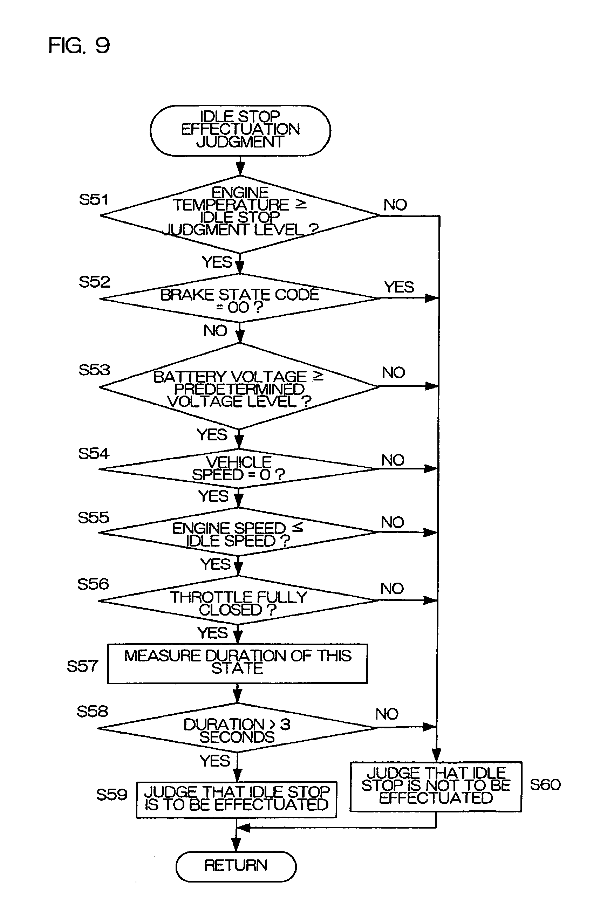

Fig. 9 is a flow chart of an exemplary sub-routine for the idle stop effectuation judgment (Step S8 in Fig. 7). The FI controller 70 judges whether the effectuation condition (1) that the engine temperature is not lower than the predetermined temperature level is satisfied (Step S51). If NO in Step S51 (the engine temperature is lower than the predetermined temperature level), the idle stop effectuation condition (1) is not satisfied. Therefore, the FI controller 70 judges that the idle stop operation is not to be performed (Step S60), and the sub-routine returns to the main routine shown in Fig. 7.

If YES in Step S51 (the engine temperature is not lower than the predetermined temperature level), the idle stop effectuation condition (1) is satisfied. Then, the FI controller 70 judges whether the brake state code is "00" (Step S52). If the brake state code is "00" (YES in Step S52), both the front and rear brake units 12, 13 are in the unbraking state and, hence, the idle stop effectuation condition (4) is not satisfied. Therefore, the FI controller 70 judges that the idle stop operation is not to be performed (Step S60), and the sub-routine returns to the main routine.

On the other hand, if the brake state code is not "00" (NO in Step S52), at least one of the front and rear brake units 12, 13 is in the braking state and, hence, the idle stop effectuation condition (4) is satisfied. Then, the FI controller 70 judges whether a condition that the battery voltage is not lower than the predetermined voltage level is satisfied (Step S53). If NO in Step S53 (the battery voltage is lower than the predetermined voltage level), the idle stop effectuation condition (3) is not satisfied. Therefore, the FI controller 70 judges that the idle stop operation is not to be performed (Step S60), and the sub-routine returns to the main routine.

On the other hand, if YES in Step S53 (the battery voltage is not lower than the predetermined voltage level), the idle stop effectuation condition (3) is satisfied. Then, the FI controller 70 judges whether the vehicle speed is substantially zero (Step S54). If the vehicle speed is not substantially zero (NO in Step S54), the idle stop effectuation condition (6) is not satisfied. Therefore, the FI controller 70 judges that the idle stop operation is not to be performed (Step S60), and the sub-routine returns to the main routine.

If the vehicle speed is substantially zero (YES in Step S54), the FI controller 70 judges whether a condition that the engine speed is not higher than the idle speed is satisfied (Step S55). If NO in Step S55 (the engine speed is higher than the idle speed), the idle stop effectuation condition (5) is not satisfied. Therefore, the FI controller 70 judges that the idle stop operation is not to be performed (Step S60), and the sub-routine returns to the main routine.

If YES in Step S55 (the engine speed is not higher than the idle speed), the engine 15 is rotated in the idle state. Then, the FI controller 70 further judges whether the throttle 45 is fully closed (Step S56). If the throttle 45 is not fully closed (NO in Step S56), the idle stop effectuation condition (5) is not satisfied. Therefore, the FI controller 70 judges that the idle stop operation is not to be performed (Step S60), and the sub-routine returns to the main routine.

If the throttle is fully closed (YES in Step S56), the idle stop effectuation condition (5) is satisfied. In this case, a period from a time when the positive judgment is provided in Step S56 after the vehicle speed once becomes not lower than the predetermined speed is measured (Step S57), and the FI controller 70 judges whether the measured period reaches the predetermined period (e.g., 3 seconds) (Step S58). If YES in Step S58, the idle stop effectuation conditions (2) and (6) are satisfied and, consequently, all the idle stop effectuation conditions (1) to (6) are satisfied. Therefore, the FI controller 70 judges that the idle stop operation is to be performed (Step S59).

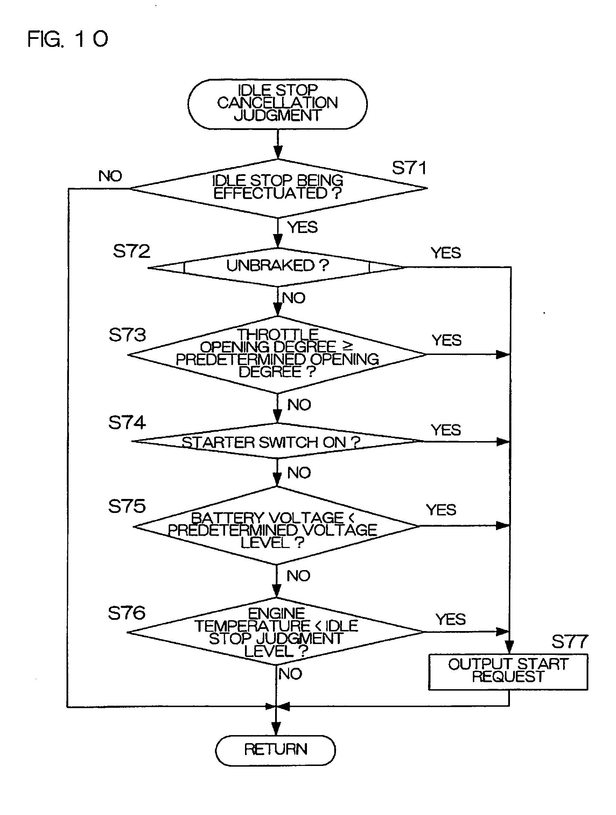

Fig. 10 is a flow chart of an exemplary sub-routine for the idle stop cancellation judgment (Step S29 in Fig. 7). The FI controller 70 judges whether the engine 15 is in the idle stop state (Step S71). This judgment may be based on whether the idle stop flag is set. If the idle stop operation is not performed (NO in Step S71), the sub-routine returns to the main routine shown in Fig. 7.

If the idle stop operation is performed (YES in Step S71), the FI controller 70 judges whether the unbraking operation is performed for the restart (Step S72). If the unbraking operation is performed for the restart (YES in Step S72), the FI controller 70 judges that the idle stop cancellation condition (1) is satisfied, and outputs the start request (Step S77). Then, the sub-routine returns to the main routine.

If the braking operation continues (NO in Step S72), the FI controller 70 judges whether a condition that the throttle opening degree is not lower than the predetermined opening degree is satisfied (Step S73). If YES in Step S73 (the throttle opening degree is not lower than the predetermined opening degree), the FI controller 70 judges that the idle stop cancellation condition (2) is satisfied, and outputs the start request (Step S77). Then, the sub-routine returns to the main routine.

If NO in Step S73 (the throttle opening degree is lower than the predetermined opening degree), the FI controller 70 further judges whether the starter switch 36 is turned on (Step S74). If the starter switch 36 is on (YES in Step S74), the FI controller 70 judges that the idle stop cancellation condition (3) is satisfied, and outputs the start request (Step S77). Then, the sub-routine returns to the main routine.

If the starter switch 36 is off (NO in Step S74), the FI controller 70 judges whether the battery voltage is lower than the predetermined voltage level (Step S75). If the battery voltage is lower than the predetermined voltage level (YES in Step S75), the FI controller 70 judges that the idle stop cancellation condition (5) is satisfied, and outputs the start request (Step S77). Then, the sub-routine returns to the main routine.

If the battery voltage is not lower than the predetermined voltage level (NO in Step S75), the FI controller 70 judges whether the engine temperature is lower than the predetermined temperature level (Step S76). If the engine temperature is lower than the predetermined temperature level (YES in Step S76), the FI controller 70 judges that the idle stop cancellation condition (4) is satisfied, and outputs the start request (Step S77). Then, the sub-routine returns to the main routine. If the engine temperature is not lower than the predetermined temperature level (NO in Step S76), the idle stop cancellation condition (4) is not satisfied, so that the sub-routine returns to the main routine without outputting the start request.

In this process, the start request is output when at least one of the idle stop cancellation conditions (1) to (5) is satisfied. Thus, the judgment in Step S17 of Fig. 7 is positive, so that the engine 15 is restarted.

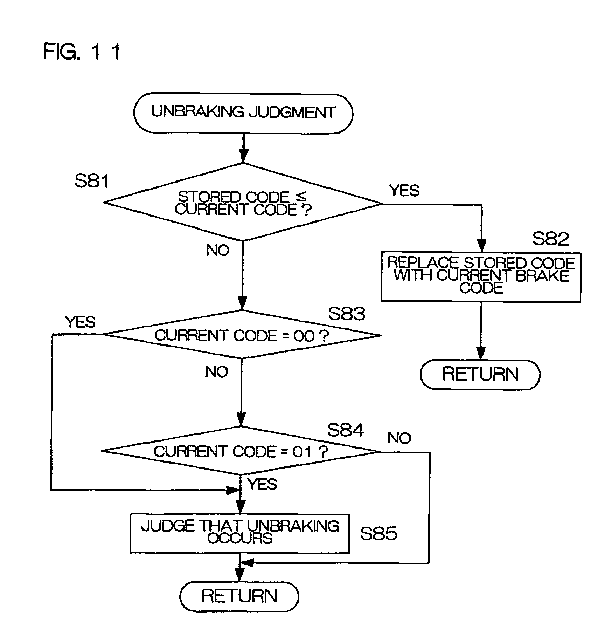

Fig. 11 is a flow chart of a specific example of the unbraking judgment process (Step S72 in Fig. 10). The FI controller 70 first compares a brake state code (current brake state code) detected in a current control cycle in the brake state detecting process (Step S6 in Fig. 7) with the brake state code stored in the memory 70M (Step S81). If a condition that the brake state code stored in the memory 70M is not greater than the brake state code detected in the current control cycle is satisfied (YES in Step S81), the FI controller 70 replaces the brake state code stored in the memory 70M with the brake state code detected in the current control cycle (Step S82), and the sub-routine returns to the sub-routine shown in Fig. 10.

The idle stop operation is not performed (see Step S52 in Fig. 9) if the brake state code is "00". Therefore, the judgment in Step S81 is positive if the brake state code is changed or maintained in the following manner.

01 → 01

01 → 10

01 → 11

10 → 10

10 → 11

11 → 11

In these cases, the state of the front brake unit 12 associated with the right grip (accelerator grip) 28 is not changed, or the state of the front brake unit 12 is changed from the unbraking state to the braking state. Therefore, it is reasonable to judge that the driver has no intention to restart the vehicle and, therefore, there is no need to restart the engine.

On the other hand, the judgment in Step S81 is negative if the brake state code is changed in the following manner.

01 → 00

10 → 00

10 → 01

11 → 00

11 → 01

11 → 10

If NO in Step S81 (the brake state code stored in the memory 70M is greater than the brake state code in the current control cycle), the FI controller 70 judges whether the brake state code in the current control cycle is "00" in binary notation (or "0" in decimal notation) (Step S83). If the brake state code is "00" (YES in Step S83), both the front brake unit 12 and the rear brake unit 13 are in the unbraking state. Therefore, the FI controller 70 judges that the unbraking operation is performed (Step S85), and the sub-routine returns to the sub-routine shown in Fig. 10.

The brake state code detected in the current control cycle is not "00" (NO in Step S83) if the brake state code is changed in the following manner.

10 → 01

11 → 01

11 → 10

If the brake state code detected in the current control cycle is "01", the front brake unit 12 associated with the right grip (accelerator grip) 28 is in the unbraking state. Therefore, it is reasonable to judge that the driver intends to start the vehicle. However, if the brake state code is changed from "11" to "10", the front brake unit 12 is still in the braking state and, therefore, it is unreasonable to judge that the driver intends to start the vehicle. Therefore, the FI controller 70 judges whether the brake state code detected in the current control cycle is "01" in binary notation (Step S84). If this judgment is positive, the FI controller 70 judges that the unbraking operation is performed (Step S85), and the sub-routine returns to the sub-routine shown in Fig. 10. If the judgment in Step S84 is negative, the sub-routine skips Step S85 to return to the sub-routine shown in Fig. 10.

Particularly, where the driver starts the two-wheeled vehicle 1 on an upward slope, the driver performs the accelerating operation by the right grip 28 while preventing reverse movement of the vehicle 1 by actuating the rear brake unit 13. Therefore, the engine can be started as intended by the driver by primarily detecting the deactuation of the front brake unit 12. Thus, the engine can be properly started even on the upward slope.

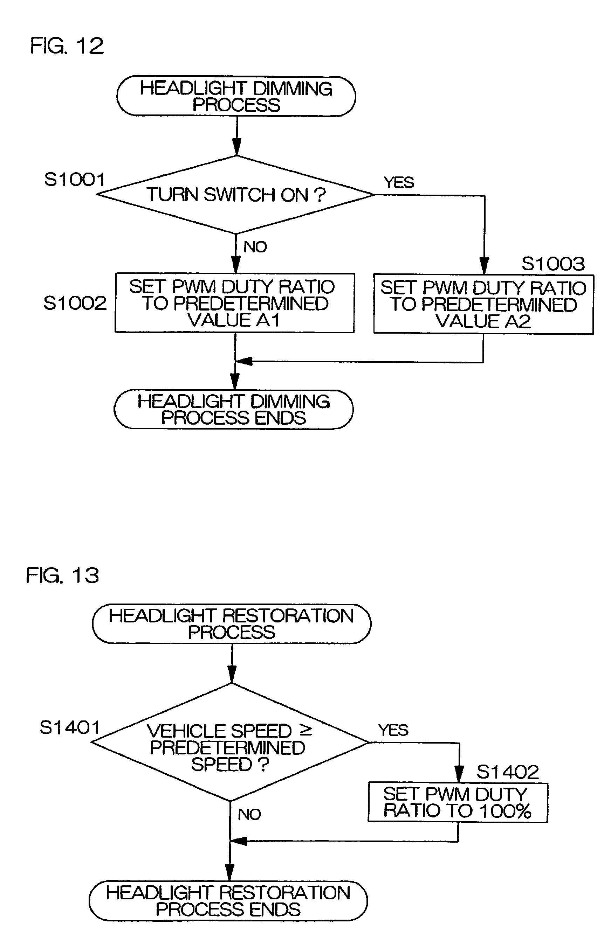

Fig. 12 is a flow chart of a sub-routine for the headlight dimming process (Step S28 in Fig. 7). The FI controller 70 first judges whether the turn switch is on (Step S1001). If the turn switch is off (NO in Step S1001), the PWM duty ratio of the PWM control circuit 65 which controls the light amount of the headlight 63 of the two-wheeled vehicle 1 is set at a predetermined level A1 (<100%) (Step S1002). During the driving of the engine 15, the PWM control circuit 65 uses a PWM duty ratio of 100%.

On the other hand, if the turn switch is on (YES in Step S1001), the PWM duty ratio of the PWM control circuit 65 for the control of the light amount of the headlight 63 of the two-wheeled vehicle 1 is set at a predetermined level A2 (>A1) (Step S1003). After Step S1002 or S1003, the headlight dimming process ends.

Here, the PWM duty ratio is set as satisfying a relationship A1<A2≤100%. For example, the level A1 is set to 50%. Thus, when the engine 15 is in the idle stop state, the power supply to the headlight 63 is reduced. When the turn switch is on, the headlight dimming process is not performed (A2=100%) for safety of the driver, or a dimming ratio is reduced.

Where the headlight 63 includes two lamps, the headlight dimming process may be performed by turning off one of the two lamps.

Fig. 13 is a flow chart of a sub-routine for the headlight restoration process (Step S23 in Fig. 7). The FI controller 70 first judges whether a condition that the vehicle speed is not lower than a predetermined speed is satisfied (Step S1401). If YES in Step S1401 (the vehicle speed is not lower than the predetermined speed), the PWM duty ratio for the PWM control of the headlight 63 of the two-wheeled vehicle 1 is set to 100% (Step S1402).

If NO in Step S1401 (the vehicle speed is lower than the predetermined speed) or after Step S1402, the headlight restoration process ends.

In the two-wheeled vehicle 1 including the fuel injection type engine 15 according to this embodiment, the engine 15 once brought into the idle stop state is restarted when the deactuation of the front brake unit 12 or the rear brake unit 13 is detected (the unbraking is detected). Therefore, the engine restart based on the detection of the unbraking requires a shorter period of time than the engine restart based on the detection of the increase in throttle opening degree. This is because, in the case of the saddle type vehicle such as the two-wheeled vehicle 1, the operation of the accelerator (for throttle up) is usually performed after the unbraking.

Further, the restart of the engine 15 based on the detection of the unbraking does not necessarily require the throttle position sensor 46. Therefore, this embodiment is applicable to a vehicle having no throttle position sensor 46.

Since the restart of the engine 15 is based on the detection of the unbraking, the engine 15 is started when the driver releases the front brake lever 30 or the rear brake lever 29 to walk away from the vehicle. This prevents the driver from leaving the vehicle 1 when the vehicle is in the idle stop state and, hence, is effective for theft prevention of the two-wheeled vehicle 1.

Since the engine 15 is restarted in response to the unbraking, the fuel injection amount at the restart of the engine can be properly adjusted. That is, when the unbraking is detected, the accelerator (throttle) is substantially fully closed. The intake air amount of the engine depends on the throttle opening degree and the cranking rate. Therefore, the intake air amount of the engine can be more easily estimated when the throttle is fully closed than when the throttle is opened. Hence, the fuel injection amount at the restart of the engine can be more easily determined by restarting the engine 15 when the unbraking is detected, i.e., when the throttle is in the fully closed state. Thus, a proper fuel injection amount is provided. Since the proper fuel injection amount is provided at the restart of the engine 15, the air-to-fuel ratio is properly determined. Thus, the engine 15 is more advantageously restarted from the idle stop.

Since the proper fuel injection amount (hence, the proper air-to-fuel ratio) is provided at the restart of the engine 15, the fuel injection amount is reduced. That is, needless fuel injection is suppressed at the restart of the engine, thereby improving fuel economy. Since the proper fuel injection amount and the proper air-to-fuel ratio are provided, it is possible to suppress generation of toxic exhaust gas components at the restart of the engine.

In this embodiment, where the engine 15 is brought into the idle stop state by actuation of both the front brake unit 12 and the rear brake unit 13, the engine 15 is restarted upon the detection of the deactuation of the front brake unit 12. Thus, the vehicle can be properly started even on an upward slope. In general, when the vehicle is stopped on a slope, both the front brake unit 12 and the rear brake unit 13 are actuated. Particularly on an upward slope, the vehicle is started typically by deactuating the front brake unit 12 with the rear brake unit 13 kept actuated for prevention of reverse movement of the vehicle 1, and then operating the accelerator (for throttle up). Therefore, the deactuation of the front brake unit 12 is primarily detected for the start of the vehicle on the upward slope.

The front brake lever 30 for the front brake unit 12 is provided adjacent to the right grip (accelerator grip) 28. By restarting the engine upon the detection of the deactuation of the front brake unit 12, the time required for the restart of the engine is reduced because of earlier detection timing, as compared with the restart of the engine based on the detection of the throttle opening degree.

Where the engine 15 is brought into the idle stop state by actuating one of the front brake unit 12 and the rear brake unit 13, the engine 15 once brought into the idle stop state is restarted upon detection of deactuation of the one brake unit. Thus, the engine 15 is reliably and speedily restarted as intended by the driver.

In this embodiment, the engine 15 once brought into the idle stop state is restarted upon detection of a throttle opening degree not lower than the predetermined opening degree irrespective of the brake states of the brake units 12, 13. Therefore, the engine once brought into the idle stop state, for example, when the vehicle is stopped only by the rear brake on the upward slope, can be restarted simply by operating the accelerator (for throttle up).

Further, when the starter switch 36 is turned on, the engine 15 once brought into the idle stop state is restarted irrespective of the brake states of the brake units 12, 13. Therefore, the engine 15 can be restarted by an ordinary starting operation.

When an engine temperature not higher than the predetermined temperature level is detected, the engine 15 once brought into the idle stop state is restarted irrespective of the brake states of the brake units 12, 13. This prevents reduction of the engine temperature to ensure proper restart of the engine 15.

When a battery voltage not higher than the predetermined voltage level is detected, the engine 15 once brought into the idle stop state is restarted irrespective of the brake states of the brake units 12, 13. This prevents reduction of the battery voltage to ensure proper restart of the engine 15.

When the engine 15 is in the idle stop state, the duty ratio of the PWM control circuit 65 for the control of the light amount of the headlight 63 is adjusted to reduce the power supply to the headlight 63. Therefore, the electric power of the battery 75 consumed by the lighting of the headlight 63 can be reduced when the engine is in the idle stop state.

Second embodiment

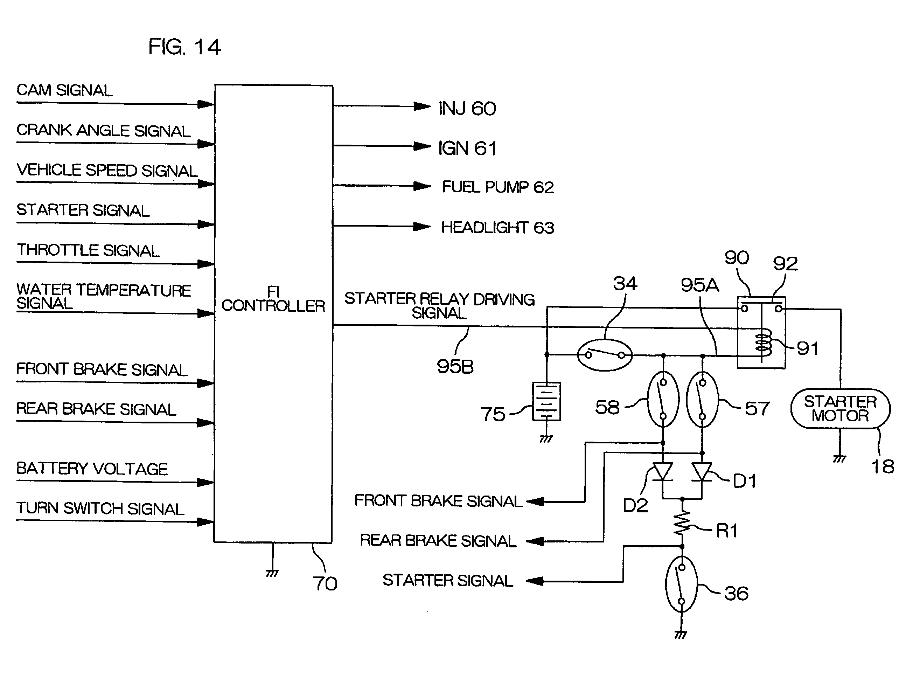

Fig. 14 is a diagram illustrating connection between an FI controller of an idle stop system and a starter motor (cell motor) in a two-wheeled vehicle according to a second embodiment of the present invention. The FI controller 70 shown in Fig. 14 receives the same input signals as those input to the FI controller 70 of the idle stop system in the two-wheeled vehicle according to the first embodiment and, therefore, no repetitious explanation will be provided. In this embodiment, a reference is also made to Fig. 3.

In the two-wheeled vehicle according to the first embodiment, the FI controller 70 outputs the start request to the ISG controller 71 when the starter signal is detected or at least one of the idle stop cancellation conditions is satisfied.

On the other hand, the two-wheeled vehicle according to the second embodiment is designed so that the engine 15 is restarted by operating a relay of the starter motor 18 without the use of the ISG controller 71. This eliminates the need for the provision of the expensive ISG controller, thereby providing the two-wheeled vehicle at lower costs.

An injector (INJ) 60, an ignition coil (IGN) 61, a fuel pump 62 and a headlight 63 (more specifically, a PWM control circuit 65) are connected to output terminals of the FI controller 70. The starter motor 18 is also connected to an output terminal of the FI controller 70 via a starter relay 90.

The starter relay 90 includes a driving circuit which includes a starter switch 36, a main switch 34, a front brake switch 57, a rear brake switch 58, a battery 75, diodes D1, D2 and resistance R1.

More specifically, the starter relay 90 includes a relay coil 91 connected at one end thereof to the battery 75 via a supply line 95A and the main switch 34 and connected at the other end thereof to the FI controller 70 via a driving signal line 95B. In the starter relay 90, the relay coil 91 is excited by a starter relay driving signal output from the FI controller 70 when the main switch 34 is on (conductive), whereby a relay switch (contact piece) 92 is turned on.

On the other hand, the front brake switch 57 and the rear brake switch 58 are each connected at one end thereof to the supply line 95A, and respectively connected at the other ends to anodes of the diodes D1, D2, so that the brake states can be detected on the anode sides of the diodes D1, D2. Cathodes of the diodes D1, D2 are connected to one end of the starter switch 36 via the resistance R1, and the other end of the starter switch 36 is grounded. The electric potentials of the anode sides of the diodes D1, D2 are used as a front brake signal and a rear brake signal, respectively, and are applied to the FI controller 70. Therefore, when one of the front brake switch 57 and the rear brake switch 58 is turned on with the main switch 34 being on (conductive), the FI controller 70 can detect it.

The electric potential at between the starter switch 36 and the resistance R1 is used as a starter signal, and is applied to the FI controller 70. Therefore, when one of the front brake switch 57 and the rear brake switch 58 is turned on and the starter switch 36 is operated to be turned on, the FI controller 70 detects it. In response to it, the FI controller 70 outputs the starter relay driving signal to excite the relay coil 91. The relay switch 92 is turned on, accordingly.

With the relay switch 92 being on, the voltage of the battery 75 is applied to the starter motor 18, which is in turn rotated to start the engine 15.

It is herein assumed that the starter switch 36 is operated to start the engine 15, for example, in a cold state or for the first time after the turn on of the main switch 34. When the braking operation is performed, at least one of the front brake switch 57 and the rear brake switch 58 is on. Therefore, the relay coil 91 of the starter relay 90 is energized by turning on the starter switch 36. Thus, the starter motor 18 is energized via the starter relay 90 to start the engine. On the other hand, when the driver does not perform the braking operation and therefore neither the front brake signal nor the rear brake signal is applied to the FI controller 70, the FI controller 70 does not output the starter relay driving signal even with the starter switch 36 being on. Therefore, the relay coil 91 is not energized and the starter motor 18 is not actuated. Hence, the braking operation is essential for the start of the engine 15 by the operation of the starter switch 36.

On the other hand, if the main switch 34 is on, the relay coil 91 of the starter relay 90 can be energized by applying the starter relay driving signal from the FI controller 70. For restarting the engine 15 once automatically brought into the idle stop state, the starter relay driving signal is output from the FI controller 70 when a predetermined restart condition is satisfied (e.g., the FI controller 70 detects the unbraking). Thus, the relay coil 91 is energized to turn on the relay switch 92, whereby the voltage of the battery 75 is applied to the starter motor 18, which is in turn rotated to restart the engine 15.

This embodiment achieves the same effects as the first embodiment described above.

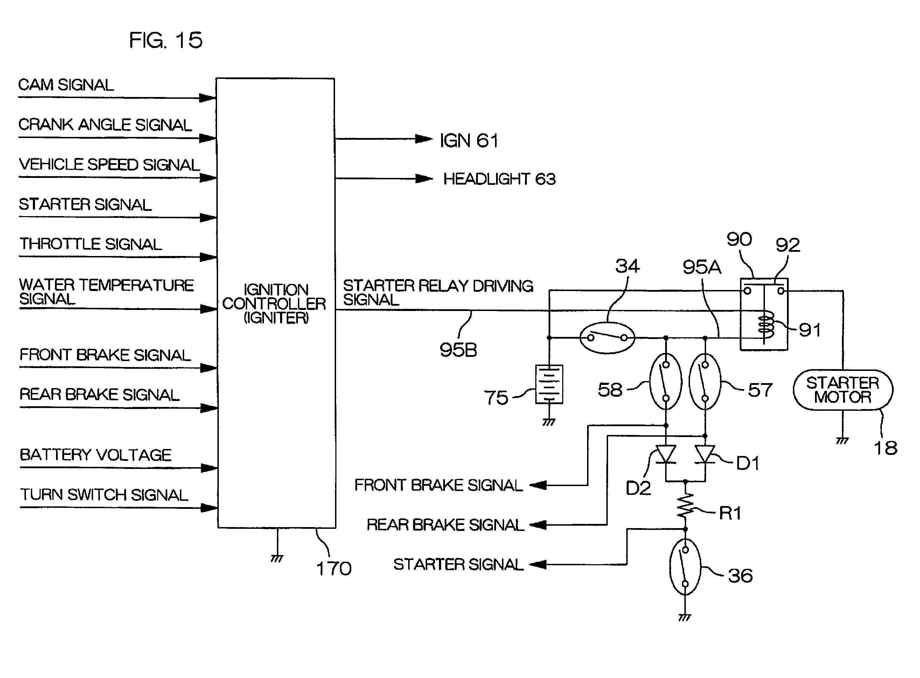

The idle stop system of the two-wheeled vehicle according to this embodiment may use an ignition controller (igniter) 170 instead of the FI controller 70 as shown in Fig. 15 to perform the same operations as described above. The idle stop system shown in Fig. 15 has substantially the same construction as the idle stop system shown in Fig. 14, except that the igniter 170 is used instead of the FI controller 70. Therefore, no repetitious explanation will be provided.

The idle stop system having the construction shown in Fig. 15 is also applicable to a two-wheeled vehicle having a non-fuel-injection type engine, i.e., a carburetor type engine. The engine once brought into the idle stop state is restarted by the unbraking, allowing for speedy start of the vehicle.

While the embodiments of the present invention have thus been described, the present invention may be embodied in any other way. The embodiments described above are directed to the two-wheeled vehicle 1, but the present invention is applicable to other saddle type vehicles including a three-wheeled vehicle, for example.

While the present invention has been described in detail by way of the embodiments thereof, it should be understood that the foregoing disclosure is merely illustrative of the technical principles of the present invention but not limitative of the same. The spirit and scope of the present invention are to be limited only by the appended claims.

This application corresponds to Japanese Patent Application No. 2004-042056 filed in the Japanese Patent Office on February 18, 2004, the disclosure of which is incorporated herein by reference in its entirety.

## Claims

1. An engine controlling apparatus for a saddle type vehicle (1) which includes an engine (15) for driving a wheel (4) of the vehicle (1) and a braking apparatus (12, 13), the engine controlling apparatus **characterized by**:

   engine stop controlling means (S8, S26, S27) which stops the engine (15) when a predetermined engine stop condition is satisfied; brake state detecting means (S6) which detects a brake state of the braking apparatus (12, 13); and restart controlling means (S29, S72) which restarts the engine (15) once stopped by the engine stop controlling means (S8, S26, S27) when deactuation of the braking apparatus (12, 13) is detected by the brake state detecting means (S6).

2. An engine controlling apparatus as set forth in claim 1, **characterized in:**

   **that** the saddle type vehicle (1) includes a front wheel (6) and a rear wheel (4); **that** the braking apparatus includes a front brake (12) which brakes the front wheel (6) and a rear brake (13) which brakes the rear wheel (4); **that** the brake state detecting means (S6) detects brake states of the front brake (12) and the rear brake (13); and **that** the restart controlling means (S29, S72) restarts the engine (15) when deactuation of the front brake (12) for unbraking the front wheel (6) is detected by the brake state detecting means (S6) in a state where the front wheel (6) and the rear wheel (4) are respectively braked by the front brake (12) and the rear brake (13).

3. An engine controlling apparatus as set forth in claim 1, **characterized in:**

   **that** the saddle type vehicle includes a front wheel (6) and a rear wheel (4), and an accelerator (28) to be operated by a driver for controlling an output of the engine (15); **that** the braking apparatus includes a front brake (12) which brakes the front wheel (6) and a rear brake (13) which brakes the rear wheel (4); **that** the saddle type vehicle further includes a front brake actuator (30) and a rear brake actuator (29) separately provided for actuating the front brake (12) and the rear brake (13), respectively, one of the front and rear brake actuators (30, 29) disposed closer to the accelerator (28) than the other brake actuator being defined as an accelerator side brake actuator; **that** the brake state detecting means (S6) detects brake states of the front brake (12) and the rear brake (13); and **that** the restart controlling means (S29, S72) restarts the engine (15) when deactuation of one of the front and rear brakes (12, 13) associated with the accelerator side brake actuator (30) for unbraking a corresponding one of the front and rear wheels (6, 4) is detected by the brake state detecting means (S6) in a state where the front wheel (6) and the rear wheel (4) are respectively braked by the front brake (12) and the rear brake (13).

4.  An engine controlling apparatus as set forth in any of claims 1 to 3, **characterized in:**

    **that** the saddle type vehicle (1) includes a front wheel (6) and a rear wheel (4);
    **that** the braking apparatus includes a front brake (12) which brakes the front wheel (6) and a rear brake (13) which brakes the rear wheel (4);
    **that** the brake state detecting means (S6) detects brake states of the front brake (12) and the rear brake (13); and
    **that** the restart controlling means (S29, S72) restarts the engine (15) when deactuation of one of the front and rear brakes (12, 13) for unbraking a corresponding one of the front and rear wheels (6, 4) is detected by the brake state detecting means (S6) in a state where only one of the wheels is braked by the corresponding brake.

5.  An engine controlling apparatus as set forth in any of claims 1 to 4, **characterized in:**

    **that** the engine controlling apparatus further includes throttle opening degree detecting means (S5) which detects a throttle opening degree of the engine (15); and
    **that** the restart controlling means (S29) restarts the engine (15) once stopped by the engine stop controlling means (S8, S26, S27) when a throttle opening degree not lower than a predetermined opening degree is detected by the throttle opening degree detecting means (S5).

6.  An engine controlling apparatus as set forth in any of claims 1 to 5, **characterized in that** the restart controlling means (S29) restarts the engine (15) once brought into an idle stop state when a starter switch (36) is operated for energization of a starter motor (18) to start the engine (15).

7.  An engine controlling apparatus as set forth in any of claims 1 to 6, **characterized in:**

    **that** the engine controlling apparatus further includes engine temperature detecting means (S1) which detects a temperature of the engine (15); and
    **that** the restart controlling means (S29) restarts the engine (15) once stopped by the engine stop controlling means (S8, S26, S27) when an engine temperature not higher than a predetermined temperature level is detected by the engine temperature detecting means (S1).

8.  An engine controlling apparatus as set forth in any of claims 1 to 7, **characterized in:**

    **that** the vehicle (1) further includes a starter motor (18) for starting the engine (15) and a battery (75) which supplies electric power to the starter motor (18);
    **that** the engine controlling apparatus further includes battery voltage detecting means (S4) which detects a voltage of the battery (75); and
    **that** the restart controlling means (S29) restarts the engine (15) once stopped by the engine stop controlling means (S8, S26, S27) when a battery voltage not higher than a predetermined voltage level is detected by the battery voltage detecting means (S4).

9.  An engine controlling apparatus as set forth in any of claims 1 to 8, **characterized in:**

    **that** the vehicle (1) further includes a headlight (63); and
    **that** the engine controlling apparatus further includes headlight controlling means (S28) which controls power supply to the headlight (63) and reduces the power supply to the headlight (63) when the engine (15) is stopped by the engine stop controlling means (S8, S26, S27).

10. An engine controlling apparatus as set forth in any of claims 1 to 9, **characterized in that** the engine (15) is a fuel injection type engine.

11. A saddle type vehicle (1), **characterized by**:

    anengine (15) fordrivingawheel (4) of the vehicle (1);
    a braking apparatus (12, 13); and
    the engine controlling apparatus as set forth in any of claims 1 to 10.

12. An idle stop canceling method for a saddle type vehicle (1) which includes an engine (15) for driving a wheel (4) of the vehicle (1), and a braking apparatus (12, 13), the method comprising the steps of:

    detecting a brake state of the braking apparatus (12, 13); and
    restarting the engine (15) once brought into an idle stop state when deactuation of the braking apparatus (12, 13) is detected in the brake state detecting step.

FIG. 1

FIG. 2

# FIG. 3

TURN SWITCH SIGNAL
FRONT BRAKE SIGNAL
REAR BRAKE SIGNAL
STARTER SIGNAL
VEHICLE SPEED SIGNAL

FI CONTROLLER — 70

MEMORY

70M

FUEL PUMP — 62

PWM CONTROL CIRCUIT — 65

HEADLIGHT — 63

ISG CONTROLLER

71    75

52    51    60    43    46    40    45    32    48

61

15

54    17    19    72(18)

FIG. 4

(1) THE ENGINE TEMPERATURE IS NOT LOWER THAN THE PREDETERMINED TEMPERATURE LEVEL.

(2) THE VEHICLE SPEED IS ONCE INCREASED TO A LEVEL NOT LOWER THAN THE PREDETERMINED SPEED.

(3) THE BATTERY VOLTAGE IS NOT LOWER THAN THE PREDETERMINED VOLTAGE LEVEL.

(4) AT LEAST ONE OF THE BRAKE SWITCHES IS ON.

(5) THE THROTTLE IS FULLY CLOSED, AND THE ENGINE IS IN THE IDLE STATE.

(6) THE DURATION OF THE ZERO VEHICLE SPEED STATE IS NOT SHORTER THAN THE PREDETERMINED PERIOD.

FIG. 5

(1) THE UNBRAKING OPERATION IS PERFORMED.

(2) THE THROTTLE OPENING DEGREE IS NOT LOWER THAN THE PREDETERMINED OPENING DEGREE.

(3) THE STARTER SWITCH IS TURNED ON.

(4) THE ENGINE TEMPERATURE IS LOWER THAN THE PREDETERMINED TEMPERATURE LEVEL.

(5) THE BATTERY VOLTAGE IS LOWER THAN THE PREDETERMINED VOLTAGE LEVEL.

FIG. 6

EP 1 566 540 A2

FIG. 7

START

S1 — DETECT ENGINE TEMPERATURE

S2 — DETECT ENGINE DRIVING STATE

S3 — DETECT VEHICLE SPEED

S4 — DETECT BATTERY VOLTAGE

S5 — DETECT THROTTLE OPENING DEGREE

S6 — BRAKE STATE DETECTING PROCESS

S7 — ENGINE STOPPED ? — YES

NO

S8 — IDLE STOP TO BE EFFECTUATED ? — YES

NO

S9 — CLEAR IDLE STOP FLAG

S10 — ENGINE SPEED ≥ COMPLETE EXPLOSION JUDGMENT SPEED ? — YES / NO

S16 — CALCULATE FUEL INJECTION AMOUNT, INJECTION TIMING AND IGNITION TIMING FOR START

S17 — START REQUEST ? — NO / YES

S18 — CLEAR IDLE STOP FLAG

S19 — ACTUATE STARTER MOTOR

S20 — ACTUATE FUEL PUMP

S21 — INJECT AND IGNITE FUEL AT START

S11 — VEHICLE STOPPED ? — YES / NO

S24 — STORE BRAKE STATE CODE

S25 — SET IDLE STOP FLAG

S26 — STOP FUEL INJECTION AND IGNITION

S27 — STOP FUEL PUMP

S28 — HEADLIGHT DIMMING PROCESS

S29 — IDLE STOP CANCELLATION JUDGMENT

S22 — HEADLIGHT DIMMING PROCESS BEING PERFORMED ? — NO / YES

S23 — HEADLIGHT RESTORATION PROCESS

S12 — CALCULATE FUEL INJECTION AMOUNT, INJECTION TIMING AND IGNITION TIMING FOR IDLING

S13 — INJECT AND IGNITE FUEL FOR IDLING

S14 — CALCULATE FUEL INJECTION AMOUNT, INJECTION TIMING AND IGNITION TIMING

S15 — INJECT AND IGNITE FUEL

RETURN

EP 1 566 540 A2

FIG. 8

```
    ┌─────────────────┐
    │  BRAKE STATE    │
    │  DETECTION      │
    └────────┬────────┘
             │
             ▼
    ┌─────────────────┐
    │ DETECT BRAKE STATE │  S41
    │ OF FRONT BRAKE  │
    └────────┬────────┘
             │
             ▼
    ┌─────────────────┐
    │ DETECT BRAKE STATE │  S42
    │ OF REAR BRAKE   │
    └────────┬────────┘
             │
             ▼
    ┌─────────────────┐
    │  ENCODE BRAKE   │  S43
    │  STATES         │
    └────────┬────────┘
             │
             ▼
    ┌─────────────────┐
    │    RETURN       │
    └─────────────────┘
```

FRONT BRAKE
INFORMATION: 1=ON

↑

O O O O O O X X

↓

REAR BRAKE INFORMATION:
1=ON

FIG. 9

```
              ┌─────────────────┐
              │   IDLE STOP     │
              │  EFFECTUATION   │
              │    JUDGMENT     │
              └─────────────────┘
                      │
                      ▼
S51          ◇ ENGINE                    NO
             ◇ TEMPERATURE ≥  ──────────────┐
             ◇ IDLE STOP                     │
             ◇ JUDGMENT LEVEL ?              │
                      │ YES                  │
                      ▼                      │
S52          ◇ BRAKE STATE CODE    YES       │
             ◇ = 00 ?          ─────────────►│
                      │ NO                    │
                      ▼                      │
S53          ◇ BATTERY VOLTAGE ≥   NO        │
             ◇ PREDETERMINED   ─────────────►│
             ◇ VOLTAGE LEVEL ?               │
                      │ YES                  │
                      ▼                      │
S54          ◇ VEHICLE            NO         │
             ◇ SPEED = 0 ?   ───────────────►│
                      │ YES                  │
                      ▼                      │
S55          ◇ ENGINE SPEED ≤     NO         │
             ◇ IDLE SPEED ?  ───────────────►│
                      │ YES                  │
                      ▼                      │
S56          ◇ THROTTLE FULLY     NO         │
             ◇ CLOSED ?      ───────────────►│
                      │ YES                  │
                      ▼                      │
S57    ┌──────────────────────────┐         │
       │ MEASURE DURATION OF THIS │         │
       │         STATE            │         │
       └──────────────────────────┘         │
                      │                      │
                      ▼                      │
S58          ◇ DURATION > 3       NO         │
             ◇ SECONDS       ───────────────►│
                      │ YES                  │
                      ▼                      ▼
S59  ┌──────────────────────┐  ┌──────────────────────┐ S60
     │ JUDGE THAT IDLE STOP │  │   JUDGE THAT IDLE    │
     │ IS TO BE EFFECTUATED │  │ STOP IS NOT TO BE    │
     └──────────────────────┘  │    EFFECTUATED       │
                 │             └──────────────────────┘
                 │◄───────────────────┘
                 ▼
           ┌──────────┐
           │  RETURN  │
           └──────────┘
```

FIG. 1 0

IDLE STOP
CANCELLATION
JUDGMENT

S71

NO ← IDLE STOP BEING EFFECTUATED ?

YES

S72 — UNBRAKED ? → YES

NO

S73 — THROTTLE OPENING DEGREE ≥ PREDETERMINED OPENING DEGREE ? → YES

NO

S74 — STARTER SWITCH ON ? → YES

NO

S75 — BATTERY VOLTAGE < PREDETERMINED VOLTAGE LEVEL ? → YES

NO

S76 — ENGINE TEMPERATURE < IDLE STOP JUDGMENT LEVEL ? → YES

S77

OUTPUT START REQUEST

NO

RETURN

FIG. 1 1

```
        ┌─────────────────────────┐
        │   UNBRAKING JUDGMENT    │
        └─────────────────────────┘
                     │
                     ▼
         ╱─────────────────────╲
S81    ╱   STORED CODE ≤         ╲      YES
      ╱    CURRENT CODE ?         ╲──────────────┐
       ╲                         ╱               │
         ╲─────────────────────╱                 ▼
                │                        ┌──────────────────────┐  S82
               NO                        │ REPLACE STORED CODE  │
                │                        │  WITH CURRENT BRAKE  │
                ▼                        │        CODE          │
         ╱─────────────────────╲  S83    └──────────────────────┘
 YES   ╱   CURRENT CODE = 00 ?  ╲                 │
  ┌───╱                         ╲                 ▼
  │    ╲                       ╱           ┌──────────────┐
  │      ╲─────────────────────╱           │   RETURN     │
  │              │                         └──────────────┘
  │             NO
  │              │
  │              ▼
  │       ╱─────────────────────╲  S84    NO
  │      ╱   CURRENT CODE = 01 ? ╲─────────────┐
  │       ╲                     ╱              │
  │         ╲─────────────────╱                │
  │              │ YES                         │
  └──────────────┤                            │
                 ▼                            │
        ┌──────────────────────┐              │
        │ JUDGE THAT UNBRAKING │  S85         │
        │       OCCURS         │              │
        └──────────────────────┘              │
                 │◄───────────────────────────┘
                 ▼
          ┌──────────────┐
          │   RETURN     │
          └──────────────┘
```

FIG. 12

```
        ┌─────────────────────────┐
        │  HEADLIGHT DIMMING      │
        │       PROCESS           │
        └─────────────────────────┘
                    │
                    ▼
             ╱╲
S1001      ╱    ╲              YES
         ╱ TURN SWITCH ON? ╲ ──────────────┐
          ╲                ╱                │
           ╲            ╱                   │
             ╲        ╱                     │
               │ NO                         ▼
               ▼                                      S1003
   ┌──────────────────────┐     ┌──────────────────────┐
   │ SET PWM DUTY RATIO   │     │ SET PWM DUTY RATIO   │
S1002│ TO PREDETERMINED   │     │ TO PREDETERMINED     │
   │      VALUE A1        │     │      VALUE A2        │
   └──────────────────────┘     └──────────────────────┘
               │                         │
               ▼◄────────────────────────┘
   ┌──────────────────────┐
   │  HEADLIGHT DIMMING   │
   │   PROCESS ENDS       │
   └──────────────────────┘
```

FIG. 13

```
        ┌─────────────────────────┐
        │ HEADLIGHT RESTORATION   │
        │       PROCESS           │
        └─────────────────────────┘
                    │
                    ▼
               ╱╲
S1401        ╱    ╲
           ╱ VEHICLE SPEED ≥ ╲    YES
          ╱  PREDETERMINED    ╲ ──────────┐
           ╲     SPEED?       ╱           │
            ╲                ╱            │
              ╲            ╱              ▼    S1402
                │ NO            ┌──────────────────┐
                │              │ SET PWM DUTY     │
                │              │ RATIO TO 100%    │
                │              └──────────────────┘
                ▼◄──────────────────────┘
   ┌──────────────────────────┐
   │  HEADLIGHT RESTORATION   │
   │    PROCESS ENDS          │
   └──────────────────────────┘
```

FIG. 14

CAM SIGNAL
CRANK ANGLE SIGNAL
VEHICLE SPEED SIGNAL
STARTER SIGNAL
THROTTLE SIGNAL
WATER TEMPERATURE SIGNAL
FRONT BRAKE SIGNAL
REAR BRAKE SIGNAL
BATTERY VOLTAGE
TURN SWITCH SIGNAL

FI CONTROLLER

70

INJ 60
IGN 61
FUEL PUMP 62
HEADLIGHT 63
STARTER RELAY DRIVING SIGNAL
95B
75
FRONT BRAKE SIGNAL
REAR BRAKE SIGNAL
STARTER SIGNAL

STARTER MOTOR

18

90 92 91
95A
34
57
58
D1
D2
R1
36

## FIG. 15

CAM SIGNAL →

CRANK ANGLE SIGNAL →

VEHICLE SPEED SIGNAL →

STARTER SIGNAL →

THROTTLE SIGNAL →

WATER TEMPERATURE SIGNAL →

FRONT BRAKE SIGNAL →

REAR BRAKE SIGNAL →

BATTERY VOLTAGE →

TURN SWITCH SIGNAL →

IGNITION CONTROLLER (IGNITER)

→ IGN 61

→ HEADLIGHT 63

STARTER RELAY DRIVING SIGNAL

95B

75

34

58

95A

57

90  92

91

STARTER MOTOR

18

FRONT BRAKE SIGNAL ←

REAR BRAKE SIGNAL ←

STARTER SIGNAL ←

D2

D1

R1

36

170

EP 1 566 540 A2